# EUROPEAN PATENT APPLICATION

(11) **EP 4 173 464 A1**
(43) Date of publication of application: **03.05.2023**
(21) Application number: 21829678.8
(22) Date of filing: 09.06.2021
(51) Int. Cl.: A01C 15/00, A01D 46/30, A01M 7/00, A01G 7/00

(54) **AGRICULTURAL ROBOT AND ASSISTANCE SYSTEM FOR AGRICULTURAL ROBOT**

(30) Priority: 24.06.2020 JP 2020109077; 24.06.2020 JP 2020109078; 24.06.2020 JP 2020109079
(71) Applicant: KUBOTA CORPORATION, Osaka-shi, Osaka 556-8601 (JP)
(72) Inventor: EDO, Shunsuke, Sakai-shi, Osaka 590-0823 (JP); ISHIKAWA, Junichi, Sakai-shi, Osaka 590-0823 (JP); HIRAOKA, Minoru, Sakai-shi, Osaka 590-0823 (JP); SAKANO, Tomoyoshi, Sakai-shi, Osaka 590-0823 (JP); MIYASHITA, Shunsuke, Sakai-shi, Osaka 590-0823 (JP)
(74) Representative: Cabinet Beau de Loménie
(86) International application number: PCT/JP2021/021864
(87) International publication number: WO 2021/261246

(57) **Abstract**

The efficiency of work done by an agricultural robot (1) in a facility (100) is improved.

An agricultural robot (1) includes a traveling body (3), a working unit (4) to do work relating to a crop (2), the working unit (4) being provided on the traveling body (3), an optical sensor (5A, 5B) provided on the traveling body (3), and a location manager (41C) to determine, based on sensor data obtained by the optical sensor (5A, 5B), whether or not the traveling body (3) is located in a facility (100) for cultivation of the crop (2), and the working unit (4) does the work relating to the crop (2) based on the working unit (4) if the location manager (41C) determines the traveling body (3) as being located in the facility (100).

## Description

### [TECHNICAL FIELD]

The present invention relates to an agricultural robot and an assistance system for an agricultural robot.

### [BACKGROUND ART]

An agricultural robot disclosed in Patent Literature 1 is known.

The agricultural robot disclosed in Patent Literature 1 includes a traveling body provided with a manipulator capable of harvesting crops.

### [CITATION LIST]

### [Patent Literature]

[Patent Literature 1] Japanese Unexamined Patent Application Publication No. 2011-229406

### [SUMMARY OF INVENTION]

### [TECHNICAL PROBLEM]

Crops such as watermelon, melon, and pumpkin are generally grown (planted) at various areas. There is a demand that, also when crops are grown in a facility, an agricultural robot do work relating to the crops appropriately. It is also necessary, when crops are grown in a facility, to know the growth state and the like of the crops. Furthermore, when work such as harvesting crops is done using an agricultural robot, making a quick search for the crops would improve the efficiency of the work, but it is difficult with the agricultural robot of Patent Literature 1 to make a search for the crops.

An object of the present invention is to provide an agricultural robot and an assistance system for an agricultural robot each of which is capable of improving the efficiency of work done by the agricultural robot in a facility when harvesting crops.

Another object of the present invention is to provide an agricultural robot and an assistance system for an agricultural robot each of which makes it possible to easily collect data to know the growth of crops and/or the like.

A further object of the present invention is to provide an agricultural robot capable of efficiently searching for crops.

### [SOLUTION TO PROBLEM]

An agricultural robot includes a traveling body, a working unit to do work relating to a crop, the working unit being provided on the traveling body, an optical sensor provided on the traveling body, and a location manager to determine, based on sensor data obtained by the optical sensor, whether or not the traveling body is located in a facility for cultivation of the crop, and the working unit does the work relating to the crop based on the working unit if the location manager determines the traveling body as being located in the facility.

The location manager determines the traveling body as being located in the facility if the sensor data includes a structure of the facility and the structure matches a first profile as seen from an interior of the facility.

The location manager determines the traveling body as being located in the facility if the sensor data includes a second profile of a cultivation area of the crop in addition to the first profile.

The agricultural robot further includes a travel controller to control travel of the traveling body based on the first profile and the second profile.

The agricultural robot further includes a map generator to generate a map of the interior of the facility based on the first profile and on the crop included in the second profile.

The location manager determines whether the structure matches the first profile based on a trained model and the sensor data.

The location manager performs reinforcement learning by acquiring the sensor data obtained during travel of the traveling body in the facility.

The location manager determines whether or not the traveling body is located in the facility based on sensor data including, as the structure, a frame of the facility.

An assistance system for an agricultural robot is an assistance system for an agricultural robot including a traveling body, a working unit to do work relating to a crop, the working unit being provided on the traveling body, and an optical sensor provided on the traveling body, wherein the agricultural robot does the work relating to the crop based on the working unit if the traveling body is located in the facility for cultivation of the crop, the assistance system including a location manager to determine, based on sensor data obtained by the optical sensor, whether or not the traveling body is located in the facility.

The assistance system further includes a travel controller to control travel of the traveling body based on the first profile and the second profile.

The assistance system further includes a map generator to generate a map of the interior of the facility based on the first profile and on the crop included in the second profile.

An agricultural robot includes a traveling body configured to move toward a cultivation location which is a location where a crop is cultivated, a manipulator configured to bring a distal portion thereof closer to the crop when the traveling body reaches a vicinity of the cultivation location, the manipulator being provided on the traveling body, a tap sound sensor including a tapping mechanism to tap the crop, the tapping mechanism being provided on the distal portion of the manipulator, and a sound recording mechanism to acquire a sound that the crop produces when tapped with the tapping mechanism, and a collector to acquire data of the sound acquired by the sound recording mechanism.

The agricultural robot further includes a controller to, at least after acquisition of the data by the collector, control the traveling body to move toward a cultivation location of another crop from which data of a sound produced thereby has not been acquired.

The agricultural robot further includes an optical sensor provided on the traveling body. The controller controls, based on sensor data obtained by the optical sensor, the traveling body to move toward the cultivation location of the other crop such that a distance between the other crop and the traveling body is a predetermined reference distance.

The agricultural robot further includes a model generator to, based on a plurality of pieces of the data acquired by the collector, generate a model to estimate a crop growth state.

The model generator performs reinforcement learning upon each data acquisition by the collector.

The agricultural robot further includes a robot hand to harvest the crop by holding the crop, and a stage determiner to determine, based on the model and the data, whether or not the tapped crop is in a harvesting stage. The robot hand harvests the tapped crop if the stage determiner determines the tapped crop as being in the harvesting stage, and does not harvest the tapped crop if the stage determiner determines the tapped crop as not being in the harvesting stage.

The collector is a memory to store the data or a communication device to transmit the data to an external terminal.

An assistance system for an agricultural robot is an assistance system for an agricultural robot including a traveling body configured to move toward a cultivation location which is a location where a crop is cultivated, a manipulator configured to bring a distal portion thereof closer to the crop when the traveling body reaches a vicinity of the cultivation location, the manipulator being provided on the traveling body, and a tap sound sensor including a tapping mechanism to tap the crop, the tapping mechanism being provided on the distal portion of the manipulator, and a sound recording mechanism to acquire a sound that the crop produces when tapped with the tapping mechanism, the assistance system including a collector to acquire data of the sound acquired by the sound recording mechanism.

The assistance system further includes a controller to, at least after acquisition of the data by the collector, control the traveling body to move toward a cultivation location of another crop from which data of a sound produced thereby has not been acquired.

The assistance system further includes an optical sensor provided on the traveling body. The controller controls, based on sensor data obtained by the optical sensor, the traveling body to move toward the cultivation location of the other crop such that a distance between the other crop and the traveling body is a predetermined reference distance.

The assistance system further includes a model generator to, based on a plurality of pieces of the data acquired by the collector, generate a model to estimate a crop growth state.

The assistance system further includes a work controller to control a robot hand configured to harvest the crop by holding the crop, and a stage determiner to determine, based on the model and the data, whether or not the tapped crop is in a harvesting stage. The work controller controls the robot hand to harvest the tapped crop if the stage determiner determines the tapped crop as being in the harvesting stage, and controls the robot hand not to harvest the tapped crop if the stage determiner determines the tapped crop as not being in the harvesting stage.

An agricultural robot includes a traveling body including a machine body and a traveling device supporting the machine body such that the machine body is allowed to travel, a manipulator including a mount detachably attached to the machine body, an arm attached to the mount, and a robot hand provided on a distal portion of the arm, a first optical sensor provided on the machine body, a second optical sensor provided on the arm or the robot hand, and a crop searcher to search for a crop based on first sensor data obtained by the first optical sensor and second sensor data obtained by the second optical sensor.

The crop searcher includes a location estimator to, based on the first sensor data, estimate a cultivation location in a facility for cultivation of the crop, the cultivation location being a location where the crop is cultivated, and a location determiner to, based on the second sensor data obtained when the traveling body is in the vicinity of the cultivation location estimated by the location estimator, determine a crop location which is a location of the crop.

The agricultural robot further includes a controller to control the traveling body to travel to the vicinity of the cultivation location estimated by the location estimator.

The location determiner determines the crop location from the second sensor data acquired from the second optical sensor, the second sensor data being obtained when the traveling body is stopped in the vicinity of the cultivation location after travel to the vicinity of the cultivation location.

The location determiner calculates, based on the second sensor data, a first distance between the crop and the second optical sensor or between the crop and the traveling body, and determines the crop location based on the calculated first distance.

The second optical sensor includes at least two out of the following: a laser sensor; an imager; and a spectrometer.

The crop searcher is to, when the first sensor data or the second sensor data includes identification information on an identifier member for identification of the crop, estimate the cultivation location and estimates the crop location based on a second distance between the identifier member and the traveling body.

The agricultural robot further includes a map creator to, when the first sensor data or the second sensor data includes one or more pieces of identification information on one or more identifier members for identification of corresponding one or more of the crops, create a cultivation map including one or more locations of the one or more crops and cultivation information based on the first sensor data, the second sensor data, and the one or more pieces of identification information.

### [ADVANTAGEOUS EFFECTS OF INVENTION]

The present invention allows an agricultural robot to do work efficiently in a facility.

The present invention makes it possible to easily collect data to know the growth and/or the like of crop(s).

The present invention makes it possible to efficiently search for crop(s).

### [BRIEF DESCRIPTION OF DRAWINGS]

FIG. 1 is a side view of an agricultural robot.
FIG. 2 is a side view of the agricultural robot in a working posture.
FIG. 3 is a perspective view of a machine body and a manipulator.
FIG. 4 is a side view of the machine body and the manipulator.
FIG. 5 is a plan view of a traveling device.
FIG. 6 is a side view of a traveling device.
FIG. 7 is an enlarged view of a portion of a robot hand.
FIG. 8 is a general view of an assistance system for an agricultural robot.
FIG. 9 illustrates a route along which the agricultural robot has traveled in a facility.
FIG. 10A is a diagram showing the relationships between sensor data (captured images) and trained models.
FIG. 10B is a diagram showing the relationships between sensor data (captured images) and trained models differing from FIG. 10A.
FIG. 11 illustrates an example of a map F1.
FIG. 12 schematically illustrates the interior of a facility for protected horticulture.
FIG. 13 is a plan view schematically illustrating the facility for protected horticulture.
FIG. 14 is a perspective view of the interior of the facility for protected horticulture in which crops are in their initial stage of growth.
FIG. 15 is a perspective view of the interior of the facility for protected horticulture in which crops are in their intermediate or late stage of growth.
FIG. 16A illustrates an example of a captured image H1.
FIG. 16B illustrates an example of a captured image H1 differing from FIG. 16A.
FIG. 17 is a flowchart of a series of steps performed by the agricultural robot.
FIG. 18 is a general view of an assistance system for an agricultural robot.
FIG. 19 shows an example of sound data (waveform H10).
FIG. 20 illustrates how an agricultural robot taps crops.
FIG. 21 illustrates an example of a captured image H1.
FIG. 22A is a diagram showing an example of tap sound information including identification information and sound data.
FIG. 22B is a diagram showing an example of tap sound information including identification information, sound data, and tap time.
FIG. 22C is a diagram showing an example including sound data at the time of harvesting, identification information, and tap time (harvest time).
FIG. 23 illustrates a route along which the agricultural robot has traveled in a facility.
FIG. 24 illustrates a variation of the assistance system for an agricultural robot.
FIG. 25 is a general view of an assistance system for an agricultural robot.
FIG. 26 illustrates how the agricultural robot does work relating to crops.
FIG. 27 illustrates an example of a captured image H1 (first sensor data H11).
FIG. 28 illustrates the relationship between an optical axis A20 of an optical sensor and an angle θ1 when an arm bracket has been rotated from a neutral position MP1.
FIG. 29 illustrates a method of determining a crop location Zn.
FIG. 30 illustrates second sensor data H12.
FIG. 31 illustrates the relationships between identifier members and crops.
FIG. 32 illustrates an example of a cultivation map F2.

### [DESCRIPTION OF EMBODIMENTS]

The following description discusses embodiments of the present invention with reference to drawings as appropriate.

### First embodiment

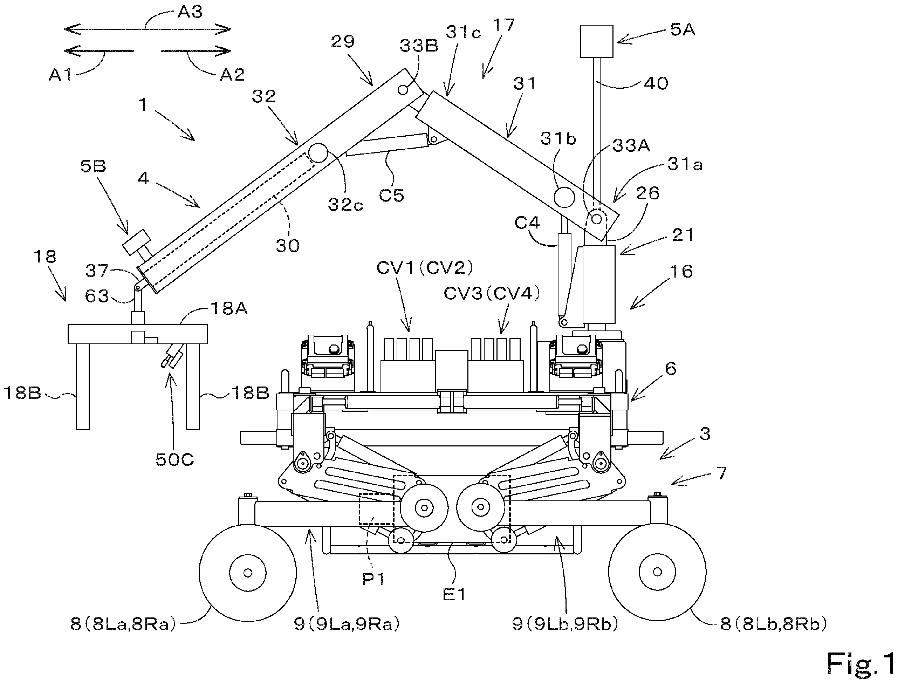

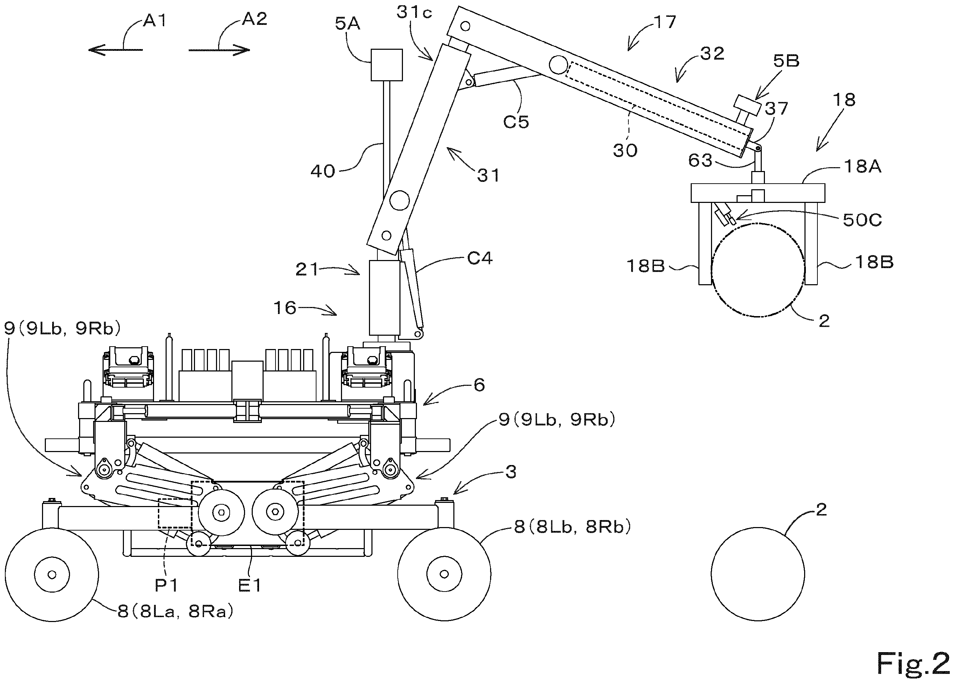

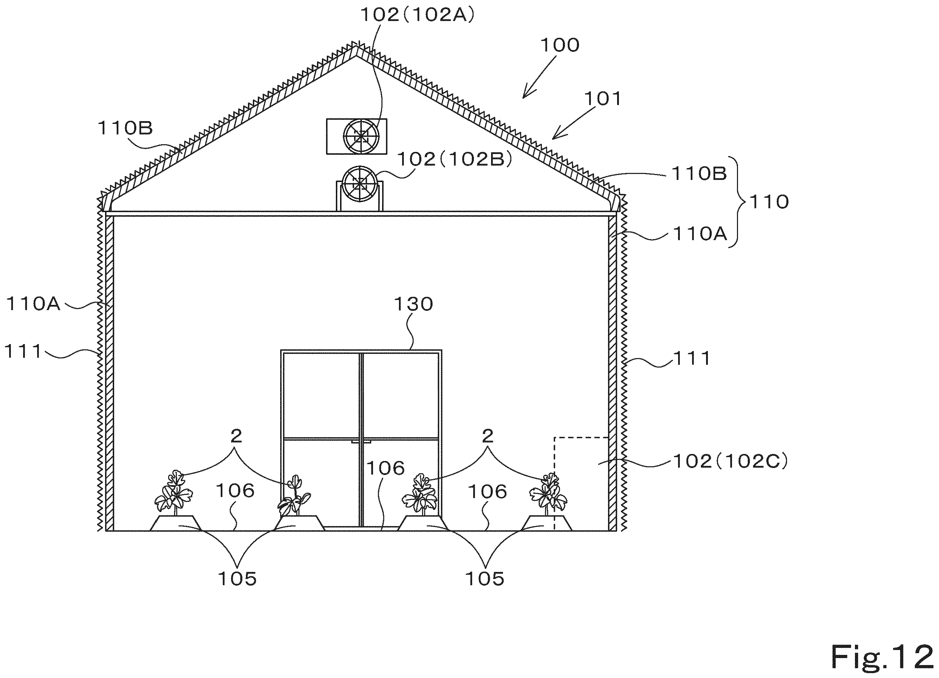

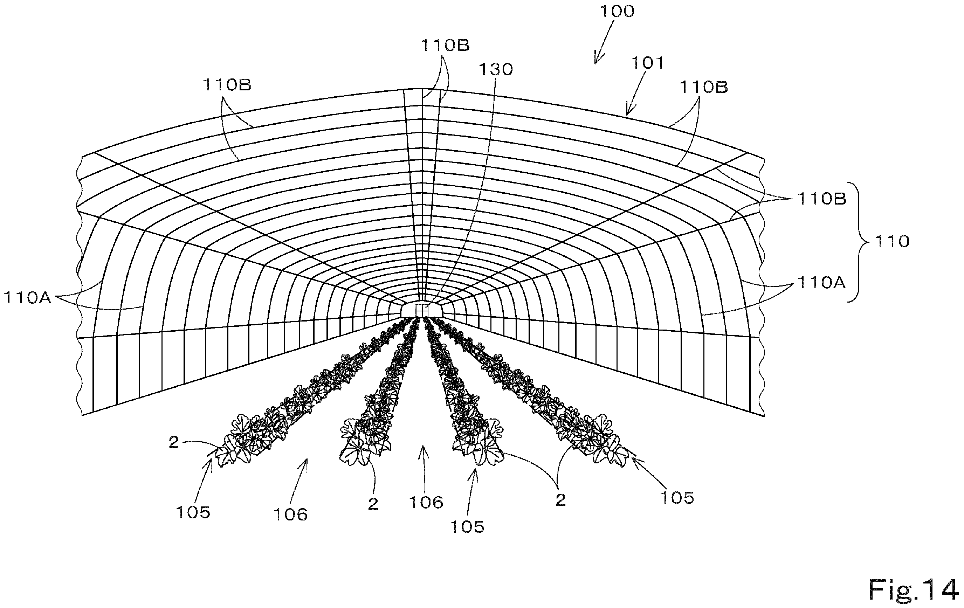

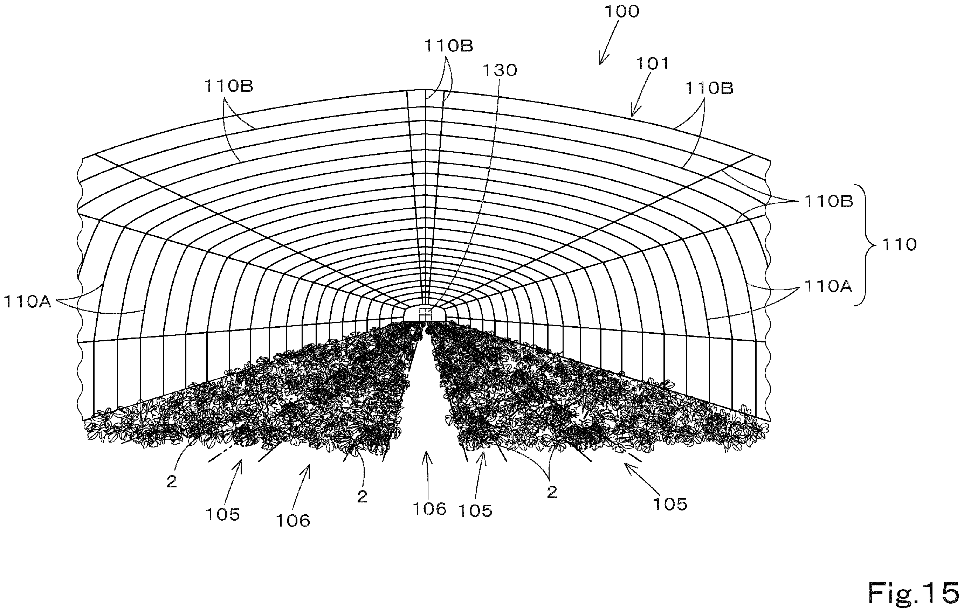

FIGS. 1 and 2 illustrate an example of an agricultural robot 1. The agricultural robot 1 does work (agricultural work) relating to crop(s) 2 grown (cultivated) in a facility such as a facility for protected horticulture (e.g., a house) or a plant factory as illustrated in FIGS. 12 to 15. The agricultural robot 1 does work relating to, for example, heavy vegetables, fruits, and/or the like which are relatively heavy crops 2 such as watermelon, melon, and/or pumpkin.

First, the following description discuses a facility with the use of, as an example, a facility for protected horticulture (protected horticulture facility).

As illustrated in FIGS. 12 to 15, a facility 100 includes, as structures thereof, a house 101 and equipment 102 located inside the house 101.

The house 101 includes a frame 110 and a covering 111. The frame 110 is, for example, a combination of various types of steel such as I-beam(s), H-beam(s), C-beam(s), square beam(s), and/or round beam(s) forming the framework of the facility 100, and includes a plurality of columns 110A and a plurality of connectors 110B. As illustrated in FIGS. 12 to 14, the columns 110A extend upward from the ground or the like, are arranged at predetermined intervals in a widthwise direction X1, and are arranged at predetermined intervals in a longitudinal direction Y1.

Some of the connectors 110B connect together the upper ends of columns 110A spaced apart from each other in the widthwise direction X1. Some of the connectors 110B connect together columns 110A spaced apart from each other in the lengthwise direction Y1.

The covering 111 is made of a member transparent to light which at least allows passage of sunlight, such as synthetic resin and/or glass. For example, the covering 111 covers the entire frame 110 on the outside of the frame 110. In other words, the covering 111 is located on the outside of the columns 110A and on the outside of the connectors 110B.

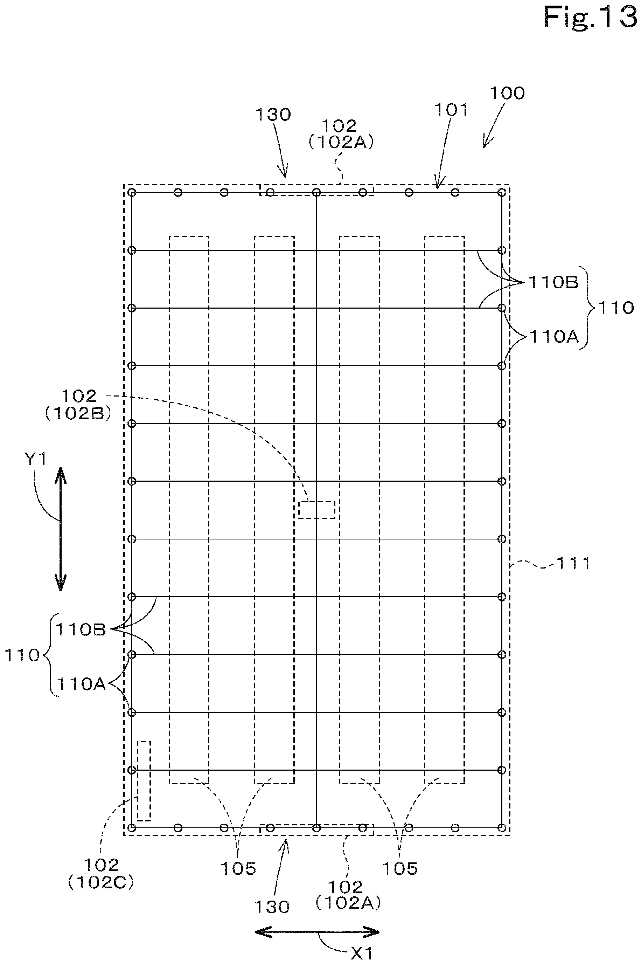

The equipment 102 includes various types of equipment for use in cultivation of the crops 2 that are capable of adjusting the temperature, humidity, air flow, and/or the like in the house 101. Specifically, the equipment 102 includes a ventilator 102A, a circulator 102B, a heat exchanger 102C, and/or the like. As illustrated in FIGS. 12 and 13, the ventilator 102A is located on an entrance 130 side of the house 101, and allows inside air to go out of the house 101 and allows outside air to enter the house 101.

The circulator 102B is located inside the house 101 to allow air inside the house 101 to circulate in a predetermined direction. The heat exchanger 102C is capable of changing the temperature in the house 101, and is formed of, for example, a heat pump. The above-described pieces of equipment 102 are examples, and the equipment 102 may include a watering device, a light device, a sprayer, and/or the like. There is no limitation on the equipment 102.

The agricultural robot 1 does various types of agricultural work relating to crop(s) 2 cultivated in cultivation area(s) 105 in the facility 100, such as, for example, harvesting the crops 2, spreading fertilizer, and/or spreading agricultural chemicals. The agricultural robot 1 is an autonomous robot.

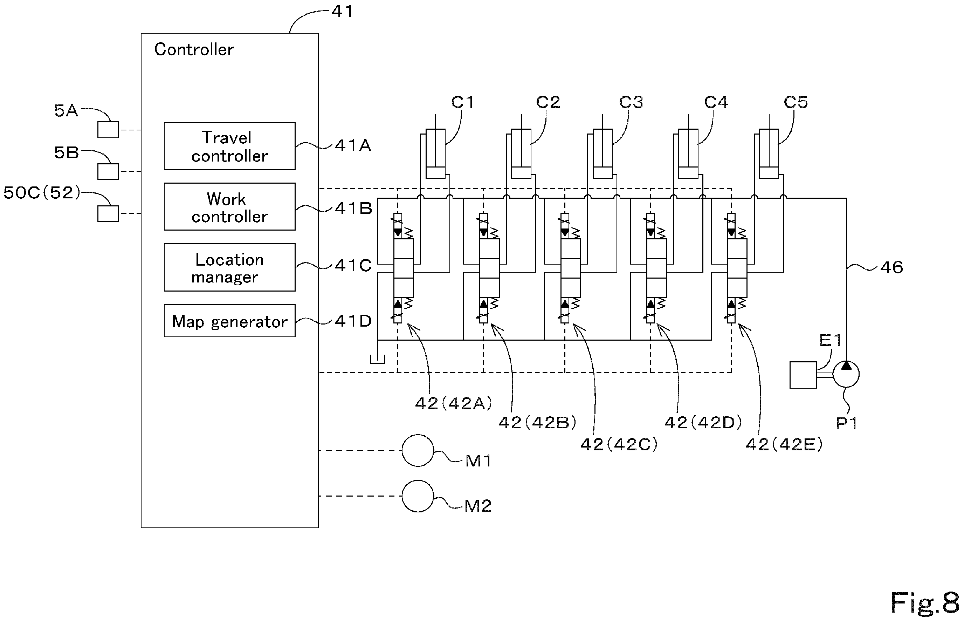

FIGS. 1 to 8 illustrate the agricultural robot 1. FIG. 8 illustrates an assistance system for an agricultural robot.

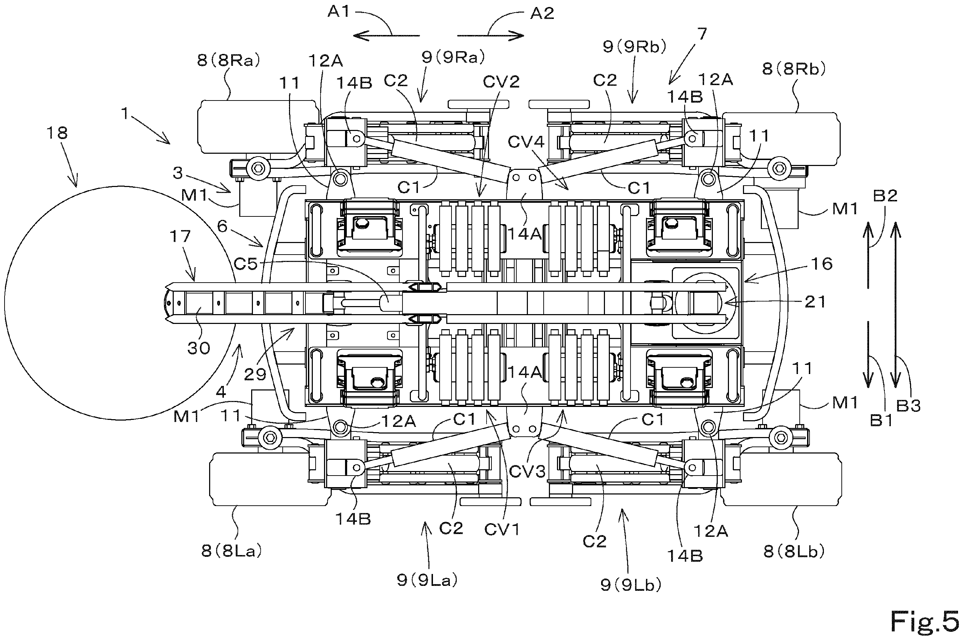

The following description discusses the agricultural robot 1 and the assistance system for an agricultural robot in detail. In the following description, the direction indicated by arrow A1 in FIGS. 1 and 2 is referred to as a forward direction, the direction indicated by arrow A2 in FIGS. 1 and 2 is referred to as a rearward direction, and the direction indicated by arrow A3 in FIG. 1 is referred to as a front-rear direction. Accordingly, the direction indicated by arrow B1 in FIG. 5 (direction to the near side in FIG. 1) is a leftward direction, and the direction indicated by arrow B2 in FIG. 5 (direction to the far side in FIG. 1) is a rightward direction. A horizontal direction orthogonal to the front-rear direction A3 is referred to a machine body width direction (direction indicated by arrow B3 in FIG. 5).

As illustrated in FIG. 1, the agricultural robot 1 includes a traveling body 3 to travel autonomously. The traveling body 3 includes a machine body 6 and a traveling device 7 supporting the machine body 6 such that the machine body 6 is allowed to travel.

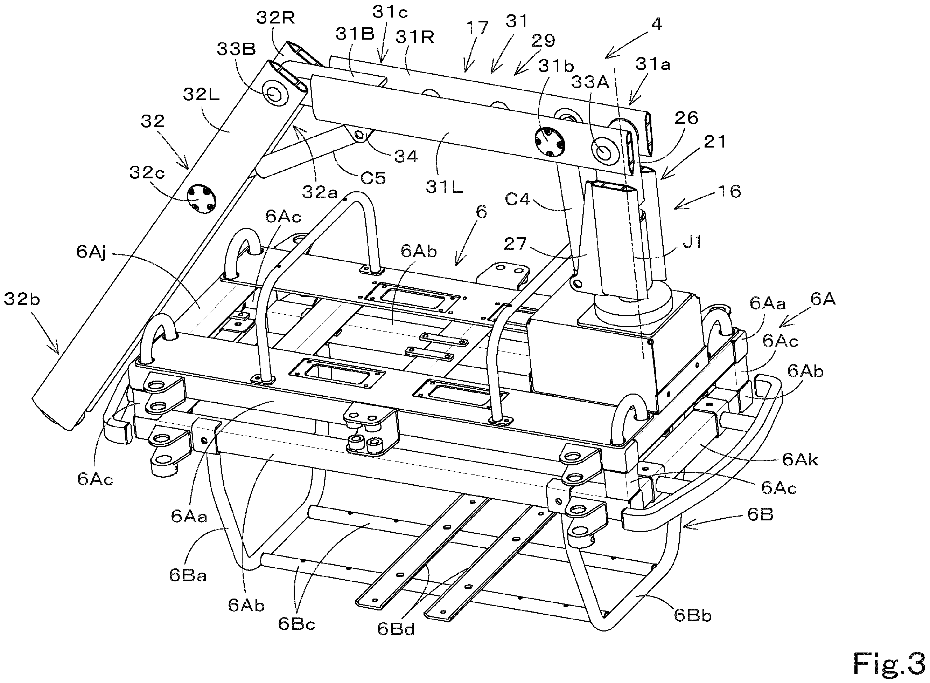

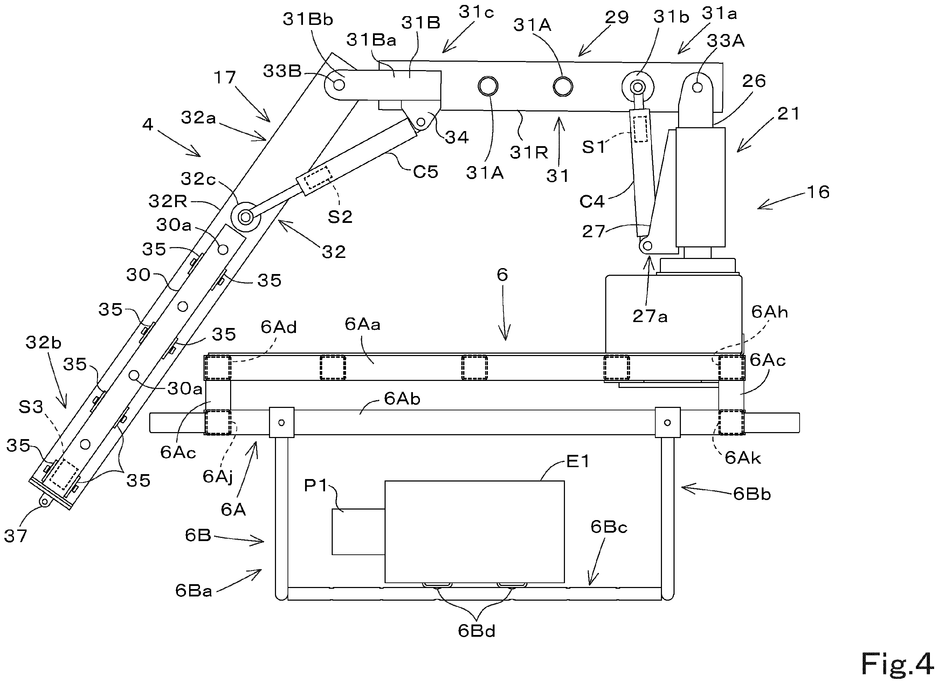

As illustrated in FIGS. 3 and 4, the machine body 6 includes a main frame 6A and a prime mover frame 6B. The main frame 6A includes a pair of first frames 6Aa which are arranged with a space therebetween along the machine body width direction B3, and a pair of second frames 6Ab which are located below the respective first frames 6Aa and are arranged with a space therebetween. The first frames 6Aa and the second frames 6Ab are connected by a plurality of vertical frames 6Ac. The vertical frames 6Ac are provided between front portions of the left first frame 6Aa and the left second frame 6Ab, between front portions of the right first frame 6Aa and the right second frame 6Ab, between rear portions of the left first frame 6Aa and the left second frame 6Ab, and between rear portions of the right first frame 6Aa and the right second frame 6Ab.

The left first frame 6Aa and the right first frame 6Aa are connected by first to fifth transverse frames 6Ad to 6Ah located between the first frames 6Aa. The first to fifth transverse frames 6Ad to 6Ah are arranged in parallel to each other along the front-rear direction A3 at intervals from the front ends of the first frames 6Aa to the rear ends of the first frames 6Aa.

Front portions of the second frames 6Ab are connected by a sixth transverse frame 6Aj, and rear portions of the second frames 6Ab are connected by a seventh transverse frame 6Ak.

The prime mover frame 6B is located below the main frame 6A. The prime mover frame 6B includes a front frame 6Ba, a rear frame 6Bb, a plurality of connector frames 6Bc, and a plurality of mount frames 6Bd. The front frame 6Ba has upper portions attached to the front portions of the left and right second frames 6Ab. The rear frame 6Bb has upper portions attached to the front portions of the left and right second frames 6Ab. The plurality of connector frames 6Bc connect together lower portions of the front frame 6Ba and the rear frame 6Bb. The plurality of mount frames 6Bd are fixed to a middle portion of each of the connector frames 6Bc in the front-rear direction A3.

As illustrated in FIG. 4, a prime mover (engine) E1 is attached to the mount frames 6Bd. A hydraulic pump P1 is attached to the prime mover E1. The hydraulic pump P1 is driven by the prime mover E1. Furthermore, the prime mover frame 6B is equipped with a hydraulic fluid tank (not illustrated) for storing hydraulic fluid to be discharged from the hydraulic pump P1.

As illustrated in FIG. 5, the main frame 6A (machine body 6) is equipped with a plurality of control valves (first to fourth control valves CV1 to CV4) to control the traveling device 7.

As illustrated in FIGS. 1, 2, and 5, the traveling device 7 is formed of a wheeled (four-wheel) traveling device including four wheels 8. Specifically, the traveling device 7 includes a first wheel 8La (left front wheel) located at the front left of the machine body 6, a second wheel 8Ra (right front wheel) located at the front right of the machine body 6, a third wheel 8Lb (left rear wheel) located at the rear left of the machine body 6, and a fourth wheel 8Rb (right rear wheel) located at the rear right of the machine body 6. Note that the traveling device 7 may be formed of a wheeled traveling device including at least three wheels 8. The traveling device 7 may be a crawler traveling device.

The traveling device 7 includes wheel supports 9 which support the wheels 8. The number of the wheel supports 9 provided corresponds to the number of the wheels 8. Specifically, the traveling device 7 includes a first wheel support 9La which supports the first wheel 8La, a second wheel support 9Ra which supports the second wheel 8Ra, a third wheel support 9Lb which supports the third wheel 8Lb, and a fourth wheel support 9Rb which supports the fourth wheel 8Rb.

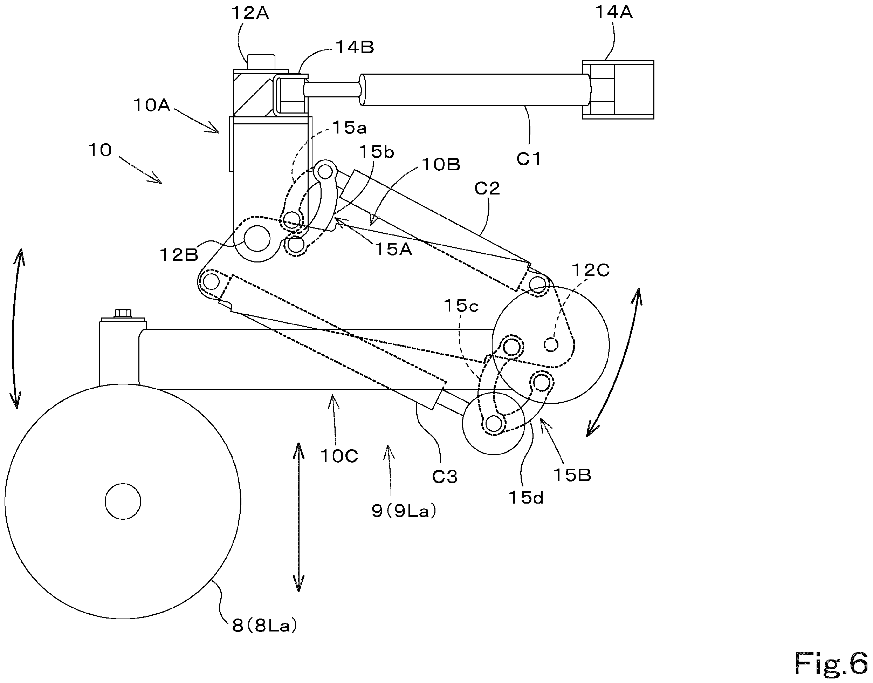

As illustrated in FIGS. 5 and 6, each of the wheel supports 9 includes a travel frame 10, a steering cylinder C1, a first lift cylinder C2, a second lift cylinder C3, and a travel motor M1.

The travel frame 10 includes a main support 10A, a swing frame 10B, and a wheel frame 10C. The main support 10A is supported on the machine body 6 such that the main support 10A is rotatable about a vertical axis (axis extending along an up-and-down direction). Specifically, the main support 10A is supported on a support bracket 11 fixed to the machine body 6 such that the main support 10A is rotatable about a first support shaft 12A having an axis extending along the up-and-down direction.

As illustrated in FIG. 5, the support bracket 11 which pivotally supports the first wheel support 9La is provided at the front left of the machine body 6, the support bracket 11 which pivotally supports the second wheel support 9Ra is provided at the front right of the machine body 6, the support bracket 11 which pivotally supports the third wheel support 9Lb is provided at the rear left of the machine body 6, and the support bracket 11 which pivotally supports the fourth wheel support 9Rb is provided at the rear right of the machine body 6.

The swing frame 10B is supported on the main support 10A such that the swing frame 10B is swingable up and down. Specifically, the swing frame 10B has an upper portion supported on the main support 10A via a second support shaft 12B such that the swing frame 10B is pivotable about a sideways axis (axis extending in the machine body width direction B3).

The swing frame 10B of each of the first and second wheel supports 9La and 9Ra has its upper front portion pivoted on a corresponding main support 10A, and the swing frame 10B of each of the third and fourth wheel supports 9Lb and 9Rb has its upper rear portion pivoted on a corresponding main support 10A.

The wheel frame 10C is supported on the swing frame 10B such that the wheel frame 10C is swingable up and down. Specifically, the wheel frame 10C is supported on the swing frame 10B via a third support shaft 12C such that the wheel frame 10C is pivotable about a sideways axis.

The wheel frame 10C of each of the first and second wheel supports 9La and 9Ra has its rear portion pivoted on a rear portion of a corresponding swing frame 10B, and the wheel frame 10C of each of the third and fourth wheel supports 9Lb and 9Rb has its front portion pivoted on a front portion of a corresponding swing frame 10B.

The steering cylinder C1, the first lift cylinder C2, and the second lift cylinder C3 are each formed of a hydraulic cylinder.

The steering cylinder C1 is located between the machine body 6 and the main support 10A. Specifically, the steering cylinder C1 has one end pivoted on a cylinder bracket 14A fixed to a middle portion of a corresponding first frame 6Aa in a front-rear direction A3, and has the opposite end pivoted on a cylinder bracket 14B fixed to the main support 10A. Extension or retraction of the steering cylinder C1 causes the travel frame 10 to swing about the first support shaft 12A, thus changing the orientation of a corresponding wheel 8 (corresponding one of the first to fourth wheels 8La to 8Rb) (steering the wheel 8). With regard to the traveling device 7 in the present embodiment, each of the wheels 8 can be steered independently.

The first lift cylinder C2 has one end pivoted on the swing frame 10B and the opposite end pivoted on a first linkage mechanism 15A. The first linkage mechanism 15A includes a first link 15a and a second link 15b. The first link 15a has one end pivoted on the main support 10A, and the second link 15b has one end pivoted on the swing frame 10B. The first link 15a and the second link 15b each have the opposite end pivoted on the opposite end of the first lift cylinder C2. Extension or retraction of the first lift cylinder C2 causes the swing frame 10B to swing up or down about the second support shaft 12B.

The second lift cylinder C3 has one end pivoted on a front portion of the swing frame 10B and the opposite end pivoted on a second linkage mechanism 15B. The second linkage mechanism 15B includes a first link 15c and a second link 15d. The first link 15c has one end pivoted on the swing frame 10B, and the second link 15d has one end pivoted on the wheel frame 10C. The first link 15c and the second link 15d each have the opposite end pivoted on the opposite end of the second lift cylinder C3. Extension or retraction of the second lift cylinder C3 causes the wheel frame 10C to swing up or down about the third support shaft 12C.

The combination of upward or downward swinging movement of the swing frame 10B caused by the first lift cylinder C2 and the upward or downward swinging movement of the wheel frame 10C caused by the second lift cylinder C3 allows a corresponding one of the wheels 8 to be raised or lowered in a parallel manner.

The travel motor M1 is formed of a hydraulic motor. Such travel motors M1 are provided so as to correspond to the respective wheels 8. Specifically, the traveling device 7 includes a travel motor M1 to drive the first wheel 8La, a travel motor M1 to drive the second wheel 8Ra, a travel motor M1 to drive the third wheel 8Lb, and a travel motor M1 to drive the fourth wheel 8Rb. Each travel motor M1 is located inward of a corresponding wheel 8 in the machine body width direction B3 and is attached to a corresponding wheel frame 10C. Each travel motor M1 is driven by a hydraulic fluid discharged from the hydraulic pump P1 and is rotatable in forward and reverse directions. By changing the direction of rotation of the travel motor M1 between the forward direction and the reverse direction, it is possible to change the direction of rotation of a corresponding wheel 8 between the forward direction and the reverse direction.

The second wheel support 9Ra, the third wheel support 9Lb, and the fourth wheel support 9Rb each include elements similar to those of the first wheel support 9La. The second wheel support 9Ra has a configuration laterally symmetrical to the first wheel support 9La. The third wheel support 9Lb is in the form obtained by a 180 degree rotation of the second wheel support 9Ra about a vertical central axis passing through the center of the machine body 6. The fourth wheel support 9Rb is in the form obtained by a 180 degree rotation of the first wheel support 9La about the central axis.

Hydraulic actuator(s) attached to the first wheel support 9La is/are controlled by the first control valve CV1. Hydraulic actuator(s) attached to the second wheel support 9Ra is/are controlled by the second control valve CV2. Hydraulic actuator(s) attached to the third wheel support 9Lb is/are controlled by the third control valve CV3. Hydraulic actuator(s) attached to the fourth wheel support 9Rb is/are controlled by the fourth control valve CV4.

Thus, the first wheel 8La to the fourth wheel 8Rb can each independently be steered. Furthermore, the first wheel 8La to the fourth wheel 8Rb can each independently be raised and lowered.

With regard to the traveling device 7, the traveling body 3 can be turned by steering the first wheel 8La to the fourth wheel 8Rb. The traveling body 3 can be caused to travel forward by causing the first wheel 8La to the fourth wheel 8Rb to rotate in the forward direction, and the traveling body 3 can be caused to travel rearward by causing the first wheel 8La to the fourth wheel 8Rb to rotate in the reverse direction. The traveling body 3 can be raised or lowered by raising or lowering the first wheel 8La to the fourth wheel 8Rb. The machine body 6 can be tilted forward or rearward by raising or lowering the first wheel 8La and the second wheel 8Ra relative to the third wheel 8Lb and the fourth wheel 8Rb or by raising or lowering the third wheel 8Lb and the fourth wheel 8Rb relative to the first wheel 8La and the second wheel 8Ra. The machine body 6 can be titled such that one of the opposite sides of the machine body 6 in the machine body width direction B3 is higher than the other by raising or lowering the first wheel 8La and the third wheel 8Lb relative to the second wheel 8Ra and the fourth wheel 8Rb or by raising or lowering the second wheel 8Ra and the fourth wheel 8Rb relative to the first wheel 8La and the third wheel 8Lb.

The agricultural robot 1 includes a manipulator 4 (working unit) attached to the traveling body 3. The manipulator (working unit) 4 does work and, for example, in the present embodiment, is at least capable of harvesting a crop 2.

As illustrated in FIGS. 3 and 4, the manipulator 4 includes a mount 16 detachably attached to the traveling body 3 (machine body 6), an arm 17 attached to the mount 16, and a robot hand 18 which is provided on the arm 17 and which is capable of holding the crop (target) 2.

As illustrated in FIG. 1, the mount 16 in the present embodiment is provided at the rear of the traveling body 3. Note that the mount 16 may be provided at the front of the traveling body 3. That is, the mount 16 need only be provided at a location offset, in one direction, from the center of the traveling body 3 in the front-rear direction A3. In the present embodiment, the agricultural robot 1 does harvesting work as the traveling body 3 travels forward, and therefore the mount 16 is provided at a location offset in a direction opposite to the direction of travel. The mount 16 is in the form of a box and is detachably attached to the traveling body 3.

The mount 16 has a rotating frame 21 extending upward. The rotating frame 21 can be caused to rotate about a rotation axis J1 by a rotary motor M2 provided inside the mount 16. The rotation of the rotating frame 21 causes the robot hand 18 to move (change in position) along a circumference centered on the rotation axis J1.

As illustrated in FIGS. 3 and 4, the arm 17 is supported on the rotating frame 21 such that the arm 17 is swingable up and down, and is bendable at a lengthwise intermediate portion thereof. The arm 17 includes a main arm 29 and a sub-arm 30.

The main arm 29 is pivoted on the rotating frame 21 such that the main arm 29 is swingable up and down, and is bendable. Specifically, the main arm 29 includes a first arm assembly 31 pivoted on the rotating frame 21 such that the main arm 29 is swingable up and down, and a second arm assembly 32 swingably pivoted on the first arm assembly 31, and is capable of being bent by the swinging movement of the second arm assembly 32 relative to the first arm assembly 31.

The first arm assembly 31 has a proximal portion 31a pivoted on an arm bracket 26. As illustrated in FIG. 3, the first arm assembly 31 includes a first arm frame 31L and a second arm frame 31R. The first arm frame 31L and the second arm frame 31R are arranged along the machine body width direction B3 and are connected to each other by connector pipe(s) 31A and/or the like. An upper portion of the arm bracket 26 is inserted between proximal portions 31a of the first arm frame 31L and the second arm frame 31R, and the proximal portions 31a of the first arm frame 31L and the second arm frame 31R are supported on the arm bracket 26 via an arm pivot shaft 33A (referred to as a "first arm pivot shaft") which has an axis extending along the machine body width direction B3 such that the proximal portions 31a of the first arm frame 31L and the second arm frame 31R are pivotable about the axis of the first arm pivot shaft 33A.

The first arm frame 31L and the second arm frame 31R are each formed of a hollow member. The length of the first arm assembly 31 is less than a dimension of the traveling body 3 (machine body 6) in the front-rear direction A3.

As illustrated in FIG. 4, the first arm assembly 31 includes a cylinder mount 31b which is in the proximal portion 31a and which is closer to a distal portion 31c than the first arm pivot shaft 33A is to the distal end portion 31c. A first arm cylinder (first hydraulic cylinder) C4 is provided to bridge the cylinder mount 31b and a cylinder mount portion 27a of a cylinder bracket 27. The first arm cylinder C4 is driven by hydraulic fluid discharged from the hydraulic pump P1 provided on the traveling body 3 to extend or retract. The extension or retraction of the first arm cylinder C4 causes the first arm assembly 31 to swing up or down. The upward or downward swinging movement of the first arm assembly 31 (arm 17) causes the robot hand 18 to be raised or lowered. The first arm cylinder C4 is provided with a first stroke sensor to detect strokes of the first arm cylinder C4.

As illustrated in FIG. 4, the first arm assembly 31 has a pivotally supporting member 31B fixed to the distal portion 31c thereof. Specifically, the pivotally supporting member 31B includes a proximal portion 31Ba inserted between the first arm frame 31L and the second arm frame 31R, and is fixed to the first arm frame 31L and the second arm frame 31R. The pivotally supporting member 31B has a cylinder stay 34 attached to a lower surface of the proximal portion 31Ba. A distal portion 31Bb of the pivotally supporting member 31B projects forward from the first arm frame 31L and the second arm frame 31R.

As illustrated in FIG. 3, the length of the second arm assembly 32 is greater than the length of the first arm assembly 31. The second arm assembly 32 has a proximal portion 32a pivoted on the distal portion 31Bb of the pivotally supporting member 31B. The second arm assembly 32 includes a third arm frame 32L and a fourth arm frame 32R. The third arm frame 32L and the fourth arm frame 32R are arranged along the machine body width direction B3, and are connected to each other by a plurality of connector plates 35. The third arm frame 32L and the fourth arm frame 32R are each formed of a hollow member. The distal portion 31Bb of the pivotally supporting member 31B is inserted between proximal portions 32a of the third arm frame 32L and the fourth arm frame 32R. The third arm frame 32L and the fourth arm frame 32R (second arm assembly 32) are pivoted on the pivotally supporting member 31B via an arm pivot shaft (referred to as a "second arm pivot shaft") 33B having an axis extending along the machine body width direction B3.

The second arm assembly 32 includes a cylinder mount 32c which is in the proximal portion 32a and which is closer to a distal portion 32b than the second arm pivot shaft 33B is to the distal portion 32b. A second arm cylinder (second hydraulic cylinder) C5 is provided to bridge the cylinder mount 32c and the cylinder stay 34. The second arm cylinder C5 is driven by hydraulic fluid discharged from the hydraulic pump P1 provided on the traveling body 3 to extend and retract. The extension or retraction of the second arm cylinder C5 causes the second arm assembly 32 to swing relative to the first arm assembly 31, causing the main arm 29 (arm 17) to be bent or stretched. Note that, in the present embodiment, the main arm 29 in a fully stretched state is in the form of a straight line, but the main arm 29 in a fully stretched state may be bent to some extent.

Furthermore, the extension or retraction of the second arm cylinder C5 allows the robot hand 18 to move away from or toward the traveling body 3. Specifically, the extension of the second arm cylinder C5 allows the robot hand 18 to move in a direction away from the traveling body 3, and the retraction of the second arm cylinder C5 allows the robot hand 18 to move in a direction toward the traveling body 3.

As illustrated in FIG. 4, the second arm cylinder C5 is provided with a second stroke sensor S2 to detect strokes of the second arm cylinder C5.

The sub-arm 30 is provided such that the sub-arm 30 can extend and retract relative to the second arm assembly 32. Therefore, the extension or retraction of the sub-arm 30 makes it possible to increase or reduce the length of the arm 17. The sub-arm 30 is formed of a square pipe in the form of a straight line. The sub-arm 30 is supported between distal portions (front portions) of the third arm frame 32L and the fourth arm frame 32R such that the sub-arm 30 is movable along a longitudinal direction. Furthermore, the sub-arm 30 is located between connector plates 35 facing each other, and can be fixed to the connector plates 35 with fixing member(s) such as bolt(s). The sub-arm 30 includes, on one side surface, protrusion(s) 30a which abut(s) the third arm frame 32L, and includes, on the opposite side surface, another protrusion(s) 30a which abut(s) the fourth arm frame 32R. The protrusions 30a make it possible to prevent or reduce the rattle of the sub-arm 30.

The sub-arm 30 is, when in a fully retracted position, contained within the space between the third arm frame 32L and the fourth arm frame 32R. Note that the sub-arm 30 in the fully retracted position may project from the second arm assembly 32 to some extent.

As illustrated in FIG. 4, the sub-arm 30 has a hanger plate 37 fixed to a distal portion thereof. The robot hand 18 is pivoted on the hanger plate 37 and is hung on the hanger plate 37 (see FIG. 1). That is, the robot hand 18 is swingably attached to the distal portion of the sub-arm 30. The distal portion of the second arm assembly 32 is provided with a third stroke sensor to measure (detect) the degree of extension of the sub-arm 30 from the second arm assembly 32.

As illustrated in FIGS. 1 and 2, the robot hand 18 includes a base member 18A and a plurality of holding nails 18B. A connecting piece 63 is provided at the upper surface side of the base member 18A. The connecting piece 63 is pivoted on the hanger plate 37. That is, the robot hand 18 is hung on the arm 17. The plurality of holding nails 18B are swingably attached to a lower surface side of the base member 18A. The robot hand 18 is capable of holding a crop 2 between the holding nails 18B (see FIG. 2) and is also capable of releasing the held crop 2, by the swinging movement of the holding nails 18B.

As illustrated in FIGS. 1 and 2, the agricultural robot 1 includes optical sensors 5A and 5B. Each of the optical sensors 5A and 5B is a Charge Coupled Devices (CCD) camera equipped with a CCD image sensor, a Complementary Metal Oxide Semiconductor (CMOS) camera equipped with a CMOS image sensor, or an infrared camera. In the present embodiment, each of the optical sensors 5A and 5B is an imager (CCD camera, CMOS camera, or infrared camera). Each of the optical sensors 5A and 5B may be a laser sensor, i.e., Light Detection And Ranging (LiDAR). A laser sensor (LiDAR) is capable of constructing a three-dimensional map of a surrounding area of the traveling body 3 by emitting pulsed infrared light or the like several millions of times per second and measuring the time from the emission to the return of the infrared light. In the present embodiment, each of the optical sensors 5A and 5B is an imager (CCD camera, CMOS camera, or infrared camera).

The optical sensor 5A is attached to the rotating frame 21. Specifically, the optical sensor 5A is attached to an upper portion of the arm bracket 26 via a supporting pillar 40. This does not imply any limitation, and the optical sensor 5A may be attached to the traveling body 3 and/or the like. A plurality of the optical sensors 5A may be provided at a plurality of locations. That is, the agricultural robot 1 may include a plurality of the optical sensors 5A. The optical sensor 5A is capable of capturing an image of the surrounding area of the traveling body 3, and acquires information about the surrounding area of the traveling body 3 by capturing an image.

The optical sensor 5B is attached to a distal portion of the second arm assembly 32. The optical sensor 5B is capable of acquiring quality information by capturing an image of a crop 2. The quality information includes, for example, the size, shape, color, pattern (stripes on watermelon), damage, and/or the like of the crop 2.

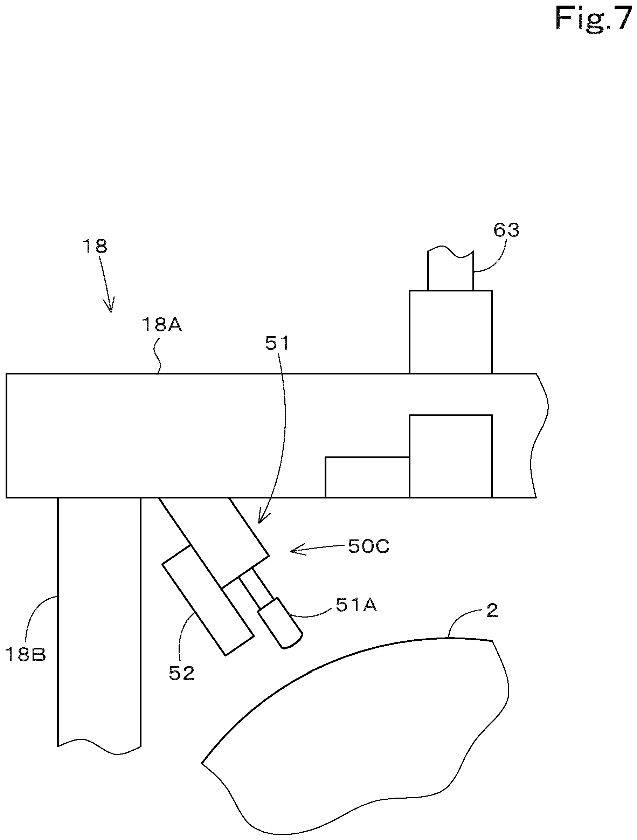

As illustrated in FIGS. 1 and 2, the agricultural robot 1 includes a tap sound sensor 50C. The tap sound sensor 50C acquires a tap sound that the crop 2 produces when hit (when tapped). As illustrated in FIG. 7, the tap sound sensor 50C is provided on the robot hand 18 (base member 18A).

The tap sound sensor 50C includes a tapping mechanism 51 and a sound recording mechanism 52. The tapping mechanism 51 includes a tapping member 51A movable toward and away from a crop 2 held with the holding nails 18B. The tapping member 51A is connected to an actuator 51B to cause the tapping member 51A to move in an axial direction. The actuator 51B is, for example, an electric actuator, and causes the tapping member 51A to move in the axial direction in accordance with a control signal to tap the crop 2 to cause the crop 2 to produce a tap sound. The sound recording mechanism 52 includes a microphone (highly directional microphone), and records (stores) a tap sound that the crop 2 produces when tapped with the tapping member S1A.

As illustrated in FIG. 8, the agricultural robot 1 includes a controller 41. The controller 41 is, for example, a microcomputer or the like including a central processing unit (CPU), an electrically erasable programmable read-only memory (EEPROM), and/or the like.

The controller 41 has connected thereto the optical sensors 5A and 5B, the tap sound sensor 50C, the travel motors M1, and the rotary motor M2. The controller 41 has also connected thereto a plurality of control valves 42. The control valves 42 include first control valves 42A, second control valves 42B, third control valves 42C, a fourth control valve 42D, and a fifth control valve 42E.

Each first control valve 42A controls a corresponding steering cylinder C1, each second control valve 42B controls a corresponding first lift cylinder C2, each third control valve 42C controls a corresponding second lift cylinder C3, the fourth control valve 42D controls the first arm cylinder C4, and the fifth control valve 42E controls the second arm cylinder C5.

The first control valves 42A, the second control valves 42B, the third control valves 42C, the fourth control valve 42D, and the fifth control valve 42E are each, for example, a solenoid valve actuated according to a control signal from the controller 41. More specifically, the first control valves 42A, the second control valves 42B, the third control valves 42C, the fourth control valve 42D, and the fifth control valve 42E are each a solenoid valve (three-way solenoid valve) whish achieves multi-position switching according to a control signal.

Upon output of a control signal from the controller 41 to the first control valves 42A, the first control valves 42A are switched to a predetermined position according to the control signal. Upon output of a control signal from the controller 41 to the second control valves 42B, the second control valves 42B are switched to a predetermined position according to the control signal.

Upon output of a control signal from the controller 41 to the third control valves 42C, the third control valves 42C are switched to a predetermined position according to the control signal. Upon output of a control signal from the controller 41 to the fourth control valve 42D, the fourth control valve 42D is switched to a predetermined position according to the control signal. Upon output of a control signal from the controller 41 to the fifth control valve 42E, the fifth control valve 42E is switched to a predetermined position according to the control signal.

The first control valves 42A, the second control valves 42B, the third control valves 42C, the fourth control valve 42D, and the fifth control valve 42E have a fluid passage 46 connected thereto, and the fluid passage 46 has connected thereto the hydraulic pump P1 to deliver hydraulic fluid.

With this, each first control valve 42A, switched between different positions, allows hydraulic fluid to be supplied selectively to either a bottom side chamber of a corresponding steering cylinder C1 or a rod side chamber of the corresponding steering cylinder C1, causing the steering cylinder C1 to extend or retract. Each second control valve 42B, switched between different positions, allows hydraulic fluid to be supplied selectively to either a bottom side chamber of a corresponding first lift cylinder C2 or a rod side chamber of the corresponding first lift cylinder C2, causing the first lift cylinder C2 to extend or retract. Each third control valve 42C, switched between different positions, allows hydraulic fluid to be supplied selectively to either a bottom side chamber of a corresponding second lift cylinder C3 or a rod side chamber of the corresponding second lift cylinder C3, causing the second lift cylinder C3 to extend or retract.

The fourth control valve 42D, switched between different positions, allows hydraulic fluid to be supplied selectively to either a bottom side chamber of the first arm cylinder C4 or a rod side chamber of the first arm cylinder C4, causing the first arm cylinder C4 to extend or retract. The fifth control valve 42E, switched between different positions, allows hydraulic fluid to be supplied selectively to either a bottom side chamber of the second arm cylinder C5 or a rod side chamber of the second arm cylinder C5, causing the second arm cylinder C5 to extend or retract.

The agricultural robot 1 includes a travel controller 41A. The travel controller 41A is electric/electronic circuit(s) provided in the controller 41, program(s) stored in the controller 41, and/or the like.

The travel controller 41A controls the traveling device 7. Specifically, the travel controller 41A controls the steering cylinders C1 (first control valves 42A) and the travel motors M1. The travel controller 41A outputs a control signal to one or more of the first control valves 42A to cause corresponding one or more steering cylinders C1 to extend or retract to change the steering direction of the traveling device 7 (machine body 6). The travel controller 41A outputs a control signal to one or more of the travel motors M1 to change the rotation speed or the rotation direction of the travel motor(s) M1 to change the speed of the traveling device 7 (machine body 6) or the direction of travel of the traveling device 7 (machine body 6).

The travel controller 41A may also control the raising/lowering, tilting, and/or the like of the machine body 6. For example, the travel controller 41A outputs a control signal to one or more of the second control valves 42B to cause corresponding one or more of the first lift cylinders C2 to extend or retract to change the raised state, lowered state, and/or tilting state of the machine body 6. The travel controller 41A outputs a control signal to one or more of the third control valves 42C to cause corresponding one or more of the second lift cylinders C3 to extend or retract to change the raised state, lowered state, or tilting state of the machine body 6.

As such, the agricultural robot 1 is controlled by the travel controller 41A to autonomously travel in, for example, the facility 100.

The agricultural robot 1 includes a work controller 41B. The work controller 41B is electric/electronic circuit(s) provided in the controller 41, program(s) stored in the controller 41, and/or the like.

The work controller 41B controls the manipulator (working unit) 4. Specifically, the work controller 41B controls the first arm cylinder C4, the second arm cylinder C5, and the rotary motor M2. The work controller 41B outputs a control signal to the fourth control valve 42D to cause the first arm cylinder C4 to extend or retract to cause the first arm assembly 31 to swing. The work controller 41B outputs a control signal to the fifth control valve 42E to cause the second arm cylinder C5 to extract or retract to cause the second arm assembly 32 to swing. The work controller 41B outputs a control signal to the rotary motor M2 to change the rotation direction of the rotary motor M2 to cause the manipulator (working unit) 4 to rotate.

As has been discussed, the work controller 41B is capable of moving the robot hand 18 to any (desired) position. Specifically, it is possible to move the robot hand 18 to a target position by the movement of the robot hand 18 along a circumference centered on the rotation axis J1 caused by the rotation of the rotating frame 21, raising/lowering of the robot hand 18 caused by upward/downward swinging movement of the first arm assembly 31, and the movement of the robot hand 18 toward/away from the traveling body 3 caused by the swinging movement of the second arm assembly 32.

The work controller 41B controls the actuator 51B (tapping member 51A). For example, the work controller 41B performs the following control (tapping control): the work controller 41B outputs a control signal to the actuator 51B to actuate the actuator 51B to cause the tapping member 51A to tap the crop 2.

The agricultural robot 1 may, for example, travel and/or do work while determining the location of the traveling body 3 (machine body 6) based on sensor data obtained by the optical sensor 5A.

As illustrated in FIG. 8, the agricultural robot 1 includes a location manager 41C. The location manager 41C is electric/electronic circuit(s) provided in the controller 41, program(s) stored in the controller 41, and/or the like.

The location manager 41C determines, based on sensor data obtained by the optical sensor 5A, whether or not the traveling body 3 (machine body 6) is located in a facility 100 for cultivation of crop(s) 2. When the optical sensor 5A is an imager, the sensor data is a captured image (image data). When the optical sensor 5A is a laser sensor (LiDAR), the sensor data is scanned data including the distance and direction from the optical sensor 5A to the sensed target (object).

The following description discusses processing performed by the location manager 41C in detail.

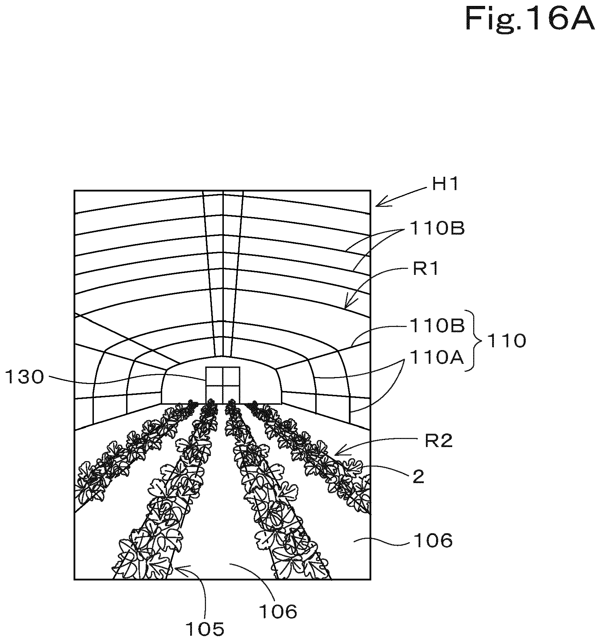

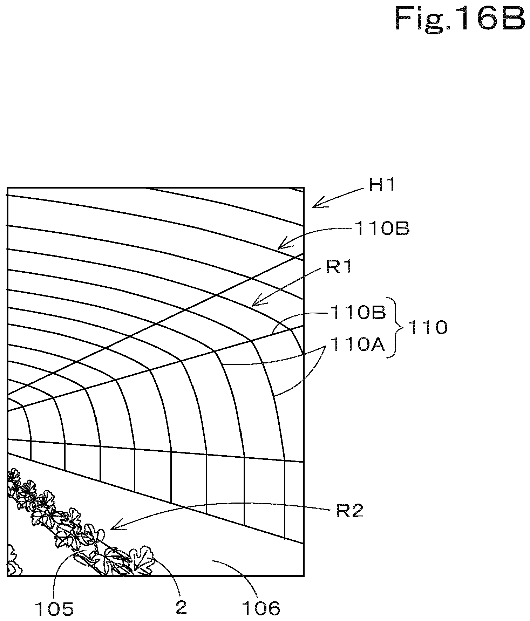

As illustrated in FIGS. 16A and 16B, the location manager 41C refers to a captured image H1 obtained by the optical sensor 5A. The location manager 41C determines whether the referenced captured image H1 includes structure(s) of the facility 100.

For example, the location manager 41C subjects the captured image H1 to image processing to analyze whether or not the captured image H1 includes structure(s) of the facility 100. The location manager 41C analyzes whether or not the captured image H1 includes the frame 110 (columns 110A, connectors 110B) of the house 101, the ventilator 102A, the circulator 102B, the heat exchanger 102C, and/or the like.

If the captured image H1 includes structure(s) (the frame 110, one or more of the columns 110A, one or more of the connectors 110B, the ventilator 102A, the circulator 102B, and/or the heat exchanger 102C), the location manager 41C determines whether the shape of the structure appearing in the captured image H1 is the same as a shape (first profile) R1 as seen from the interior of the facility 100. The location manager 41C determines, with regard to a structure in the captured image H1, whether or not a shape (profile) obtained from the outline, recess(es)/protrusion(s), surface color (gradation), and/or the like of the structure is the same as the first profile R1 as seen from the interior of the facility 100.

Specifically, the location manager 41C determines whether or not the shape of structure(s) appearing in the captured image H1 matches the first profile R1 based on a trained model and the captured image H1. The trained model is obtained by preparing a plurality of pieces of sensor data (captured images H1) and performing deep learning using artificial intelligence (AI), and enables determination of whether the shape of structure(s) extracted from a certain captured image H1 matches the shape of the structure(s) as seen from the interior of the facility 100.

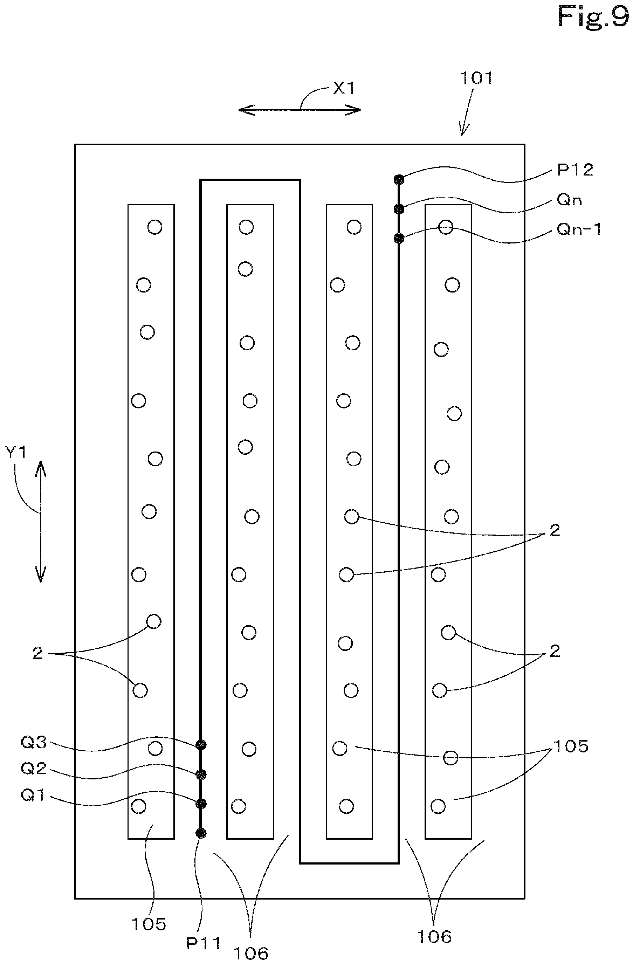

In order to build the trained model, the following data acquisition work is performed: as illustrated in FIG. 9, as the agricultural robot 1 is caused to travel through each passage 106 between cultivation areas 105 in the facility 100, the optical sensor 5A acquires a plurality of pieces of sensor data (captured images H1). In the data acquisition work, the agricultural robot 1 is caused to travel along cultivation areas 105 from a work start point P11 to a work end point P12 simulating actual agricultural work done by the agricultural robot 1, during which a plurality of pieces of sensor data (captured images H1) are acquired.

Then, the plurality of pieces of sensor data (captured images H1) are stored in the controller 41, and deep learning is performed using artificial intelligence (AI) to build the trained model (model building work).

The trained model in the above-described embodiment is built by the model building work in which the agricultural robot 1 acquires a plurality of pieces of sensor data (captured images H1). Note, however, that the plurality of pieces of sensor data (captured images H1) may be transmitted to another computer other than the agricultural robot 1, the model may be built by the computer, and the built trained model may be stored in the controller 41.

The trained model in the above-described embodiment is built using captured images H1 obtained during actual travel of the agricultural robot 1 in the facility 100. Note, however, that captured images of structure(s) (the frame 110, one or more of the columns 110A, one or more of the connectors 110B, the ventilator 102A, the circulator 102B, and/or the heat exchanger 102C) may be read from database(s) into the controller 41 or a computer and the trained model may be built using the captured images read from the database(s).

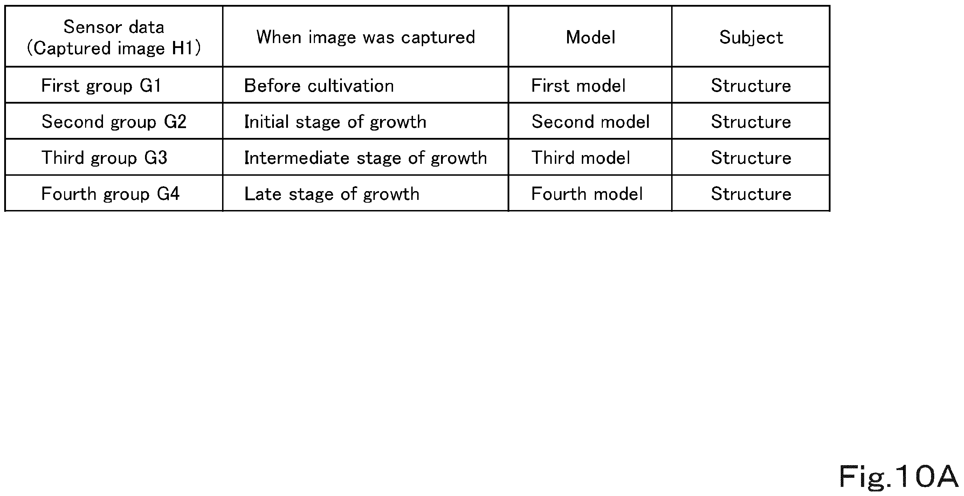

As shown in FIG. 10A, sensor data (captured images H1) for use in building trained models may be divided into groups corresponding to respective growth stages of crop(s) 2 cultivated in the facility 100, and the trained models may be built for the respective groups of the sensor data (captured images H1).

For example, as shown in FIG. 10A, a first group G1 includes sensor data (captured image(s) H1) of the interior of the facility 100 before crops 2 are cultivated, and such sensor data (captured image(s) H1) does not include any image of the crops 2. A second group G2 includes sensor data (captured image(s) H1) obtained when the crops 2 under cultivation are in in their initial stage, and such sensor data (captured image(s) H1) includes image(s) of the crops 2 in the initial stage of growth.

A third group G3 includes sensor data (captured image(s) H1) obtained when the crops 2 under cultivation are in their intermediate stage, and such sensor data (captured image(s) H1) includes image(s) of the crops 2 in the intermediate stage of growth. A fourth group G4 includes sensor data (captured image(s) H1) obtained when the crops 2 under cultivation are in their late stage, and such sensor data (captured image(s) H1) includes image(s) of the crops 2 in the late stage of growth.

Thus, the trained model (first model) obtained using the sensor data of the first group G1 is used to perform the determination regarding the shape of structure(s) when no crops 2 are present in the facility 100. The trained model (second model) obtained using the sensor data of the second group G2 is used to perform the determination regarding the shape of structure(s) when the crops 2 are in the initial stage of growth. The trained model (third model) obtained using the sensor data of the third group G3 is used to perform the determination regarding the shape of structure(s) when the crops 2 are in the intermediate stage of growth. The trained model (fourth model) obtained using the sensor data of the fourth group G4 is used to perform the determination regarding the shape of structure(s) when the crops 2 are in the late stage of growth.

The location manager 41C applies current sensor data (captured image H1) to a trained model (any of the first to fourth models) and, if the shape of structure(s) in the current sensor data (captured image H1) is determined as being the same as the shape (first profile R1) as seen from the interior of the facility 100 (substantially the same in shape), the location manager 41C determines the agricultural robot 1 (traveling body 3) as being located in the facility 100. If the shape of the structure(s) in the sensor data (captured image H1) is determined as differing from the shape of the first profile R1, the location manager 41C determines the agricultural robot 1 (traveling body 3) as being located outside the facility 100.

In the above-described embodiment, whether or not the agricultural robot 1 is located in the facility 100 is determined based on whether or not the sensor data (captured image H1) includes the first profile R1 of a structure of the facility 100. Note, however, that the traveling body 3 (machine body 6) may be determined as being located in the facility 100 when the sensor data (captured image H1) includes a second profile of a cultivation area 105 for crops 2 in addition to the first profile R1.

The location manager 41C in FIG. 8 determines the agricultural robot 1 (traveling body 3) as being located in the facility 100 if, as illustrated in FIGS. 16A and 16B, sensor data (captured image H1) includes a second profile R2 of cultivation area(s) 105 for crops 2 in addition to the first profile R1. The second profile R2 is the shape of crop(s) 2 or the shape of crop(s) 2 and cultivation area(s) 105.

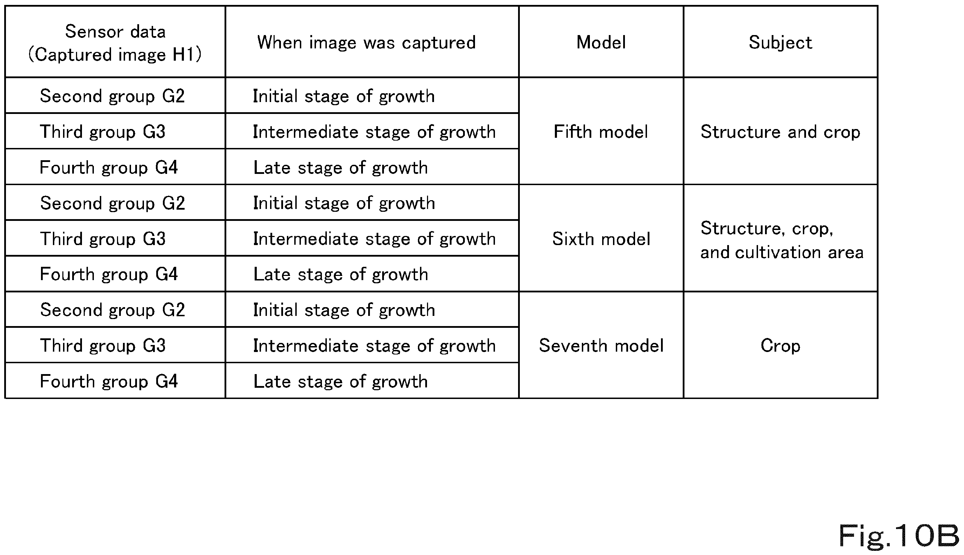

When the first profile R1 and the second profile R2 are used in determining whether or not the agricultural robot 1 (traveling body 3) is located in the facility 100 as described above, as shown in FIG. 10B, for example, a trained model (fifth model) for the determination regarding a shape including structure(s) and crop(s) 2 and a trained model (sixth model) for the determination regarding a shape including structure(s), crop(s) 2, and cultivation area(s) 105 are used. The fifth model and the sixth model may be built from sensor data of the second to fourth groups G2 to G4.

The location manager 41C applies sensor data (captured image H1) to the fifth model or the sixth model and, if the sensor data (captured image H1) is determined as matching (being the same in shape as) the first profile R1 and the second profile R2, the location manager 41C determines the agricultural robot 1 (traveling body 3) as being located in the facility 100. On the other hand, after the start of travel or work, the location manager 41C applies sensor data (captured image H1) to the fifth model or the sixth model and, if the sensor data (captured image H1) does not match the first profile R1 or the second profile R2, the location manager 41C determines the agricultural robot 1 (traveling body 3) as not being located in the facility 100.

Note that, as shown in FIG. 10B, the location manager 41C may include, for example, a trained model (seventh model) for the determination regarding the shape(s) of crop(s) 2. The seventh model can be built using captured image(s) H1 including at least crop(s) 2. For example, the seventh model may be built from sensor data of the foregoing second to fourth groups G2 to G4. Captured images of crops 2 may be read from database(s) into the controller 41 or a computer and the seventh model may be built using the captured images read from the database(s). There is no limitation on the seventh model.

In the above-described embodiment, whether or not the agricultural robot 1 (traveling body 3) is located in the facility 100 is determined using sensor data (captured image(s) H1) obtained by the optical sensor 5A as illustrated in FIGS. 16A and 16B. Additionally, the agricultural robot 1 (traveling body 3) performs autonomous travel based on the shape (first profile) of structure(s) included in the sensor data (captured image(s) H1) and the second profile ([the shape of crop(s) 2] or [the shape of crop(s) 2 and cultivation area(s) 105]).

First, when the agricultural robot 1 (traveling body 3) is determined as being located in the facility 100, the travel controller 41A outputs a control signal and/or the like to the travel motors M1 to cause the agricultural robot 1 (traveling body 3) to start traveling.

After the start of travel, the travel controller 41A extracts passage(s) 106 from sensor data (captured image H1) such as those illustrated in FIGS. 16A and 16B. The travel controller 41A controls the steering cylinders C1 (first control valves 42A) to cause the agricultural robot 1 (traveling body 3) to travel along the passage(s) 106 (cultivation area(s) 105) extracted during travel (after the start of travel). With regard to the determination regarding the passage(s) 106, for example, an area between adjacent cultivation areas 105 in the sensor data (captured image H1) may be determined as being a passage 106, and an area between crops 2 may be determined as being a passage 160. There is no limitation on the determination.

During the travel of the agricultural robot 1 (traveling body 3), the location manager 41C applies sensor data (captured image H1) obtained by the optical sensor 5A during the travel to at least one of the first to sixth models to determine whether structure(s) included in the captured image H1 obtained during the travel is/are the frame 110, one or more of the columns 110A, one or more of the connectors 110B, the ventilator 102A, the circulator 102B, and/or the heat exchanger 102C. If the distance between the agricultural robot 1 (traveling body 3) and the structure is short, the location manager 41C outputs a stop command to the travel controller 41A. Upon receipt of the stop command, the travel controller 41A automatically stops the travel of the agricultural robot 1 (traveling body 3).

Alternatively, the location manager 41C may apply the sensor data (captured image H1) obtained during the travel to at least one of the first to sixth models to determine the location(s) of the structure(s), crop(s) 2, cultivation area(s) 105, and/or passage(s) 106 in the captured image H1 relative to the agricultural robot 1 (traveling body 3), extract an area free of obstacles (travelable area) forward of or rearward of the agricultural robot 1 (traveling body 3), and automatically prepare a travel route (direction of travel, speed, and/or the like) for the agricultural robot 1 (traveling body 3). In such a case, the controller 41A controls the travel so that the agricultural robot 1 (traveling body 3) travels along the travel route prepared by the location manager 41C.

Alternatively, the location manager 41C may apply the sensor data (captured image H1) obtained during the travel to at least one of the first to sixth models to estimate, from the location(s) of the structure(s), crop(s) 2, cultivation area(s) 105, and/or passage(s) 106 in the captured image H1 relative to the agricultural robot 1 (traveling body 3), the location of the agricultural robot 1 (traveling body 3) (referred to as "traveling body location") in the facility 100.

Note that, when the agricultural robot 1 (traveling body 3) is caused by the travel controller 41A to autonomously travel in the facility 100, the controller 41 may acquire captured images H1 obtained by the optical sensor 5A during the travel and perform reinforcement learning to further train the trained model(s) (any of the first to sixth models) using the acquired captured images H1.

The agricultural robot 1 may include a map generator 41D as illustrated in FIG. 8. The map generator 41D is electric/electronic circuit(s) provided in the controller 41, program(s) stored in the controller 41, and/or the like.

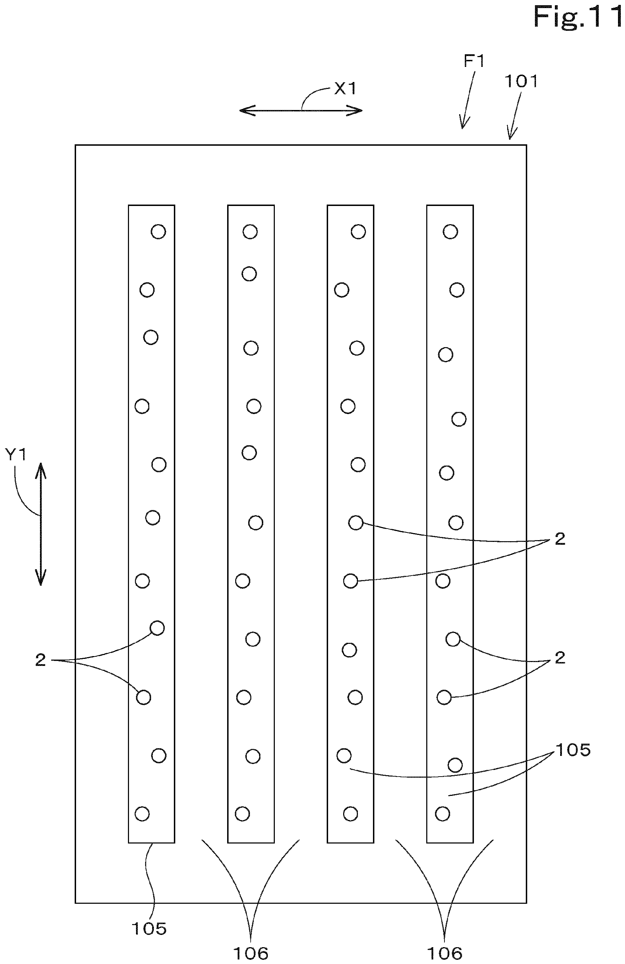

The map generator 41D generates a map of the interior of the facility 100 based on the first profile (the shape of structure(s)) obtained from the captured image(s) H1 and the second profile ([the shape of crop(s) 2] or [the shape of crop(s) 2 and the shape of cultivation area(s) 105]). For example, as illustrated in FIG. 9, the map generator 41D acquires a plurality of pieces of sensor data (captured images H1) obtained during travel of the agricultural robot 1 along the cultivation areas 105 from the work start point P11 to the work end point P12. The map generator 41D estimates, from the plurality of pieces of sensor data (captured images H1), the location(s) of structure(s), crop(s), and/or passage(s) as seen from a certain location, using the foregoing trained model(s). Specifically, the map generator 41D refers to each of the captured images H1*n* (*n* = 1, 2, 3, ... and *n*) obtained during travel from the work start point P11 to the work end point P12, extracts each subject (structure(s), crop(s) 2, and/or passage(s) 106) from the captured image H1*n*, and estimates a location Q*n* (X coordinate: Q*nx*, Y coordinate: Q*ny*) at which the captured image H1*n* was captured (such a location may be referred to as "image capture location Q*n*") based on the shape of each extracted subject (structure(s), crop(s) 2, and/or passage(s) 106). The map generator 41D estimates a distance (horizontal distance) L*n* between the estimated image capture location Q*n* and the subject (structure(s), crop(s) 2, and/or passage(s) 106) appearing in the captured image H1*n*, and, as illustrated in FIG. 11, generates a map F1 including the planar contour of the house 101 (structure), the location(s) and shape(s) of the crop(s) 2, and/or the location(s) and shape(s) of the passage(s) 106. The map F1 created by the map generator 41D is recorded (stored) in the controller 41. The map F1 may be transmitted to an external device (a mobile terminal, a personal computer, and/or a server) and/or the like via a communication device of the agricultural robot 1. The map F1 may be outputted to the travel controller 41A and/or the work controller 41B to be used for travel and/or work.

For example, after the start of travel, the location manager 41C applies sensor data (captured image H1) obtained after the start of travel to at least one of the first to sixth models to estimate the location of the agricultural robot 1 (traveling body 3) (traveling body location) in the facility 100 from the location(s) of the structure(s), crop(s) 2, cultivation area(s) 105, and/or passage(s) 106 in the captured image H1 relative to the agricultural robot 1 (traveling body 3). The travel controller 41A compares the traveling body location with the map F1 to control the agricultural robot 1 (traveling body 3) to move along the passage(s) 106.

The work controller 41B refers to sensor data (captured image(s) H1) obtained by the optical sensor 5A during autonomous travel of the agricultural robot 1 (traveling body 3). The work controller 41B applies sensor data (captured image H1) to the seventh model to determine whether or not crop(s) 2 is/are present in the vicinity of the agricultural robot 1 (traveling body 3). Specifically, the work controller 41B determines that a crop 2 is present in the vicinity of the agricultural robot 1 (traveling body 3) if the sensor data (captured image H1) includes a profile of a crop 2 (third profile), and determines that there is no crop 2 in the vicinity of the agricultural robot 1 (traveling body 3) if the sensor data (captured image H1) includes no third profile.

If a crop 2 appers in the sensor data (captured image H1) (if the sensor data includes a third profile), the work controller 41B controls the first arm cylinder C4, the second arm cylinder C5, and/or the rotary motor M2 to move the robot hand 18 to the crop 2.

The work controller 41B performs harvesting of the crop 2 by, for example, causing the robot hand 18 to hold the crop 2 and move the held crop 2 toward a passage 106. Alternatively, with the robot hand 18 in proximity to the crop 2 (with the crop 2 held in the robot hand 18), the work controller 41B outputs a control signal to the actuator 51B to cause the tapping member 51A to tap the crop 2 (see FIG. 7).

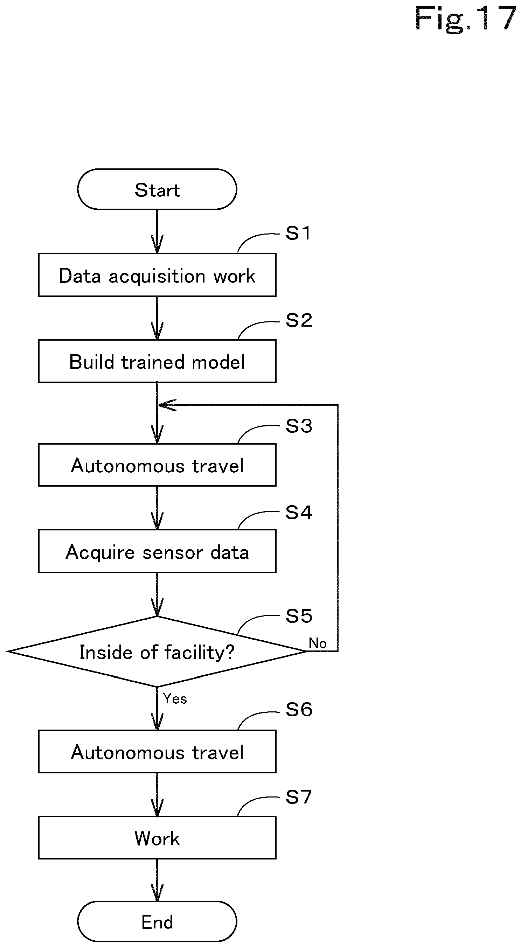

FIG. 17 is a flowchart of a series of steps performed by the agricultural robot.

As shown in FIG. 17, the agricultural robot 1 is caused to travel along the passage(s) 106 in the facility 100, and sensor data (captured image(s) H1) obtained via sensing by the optical sensor 5A during the travel is acquired (S 1). That is, the agricultural robot 1 is caused to travel in the facility 100 to perform data acquisition work (S 1). After the data acquisition work, the controller 41 is used to perform model building work to build trained model(s) (one more of the first to seventh models) (S2). Note that the accuracy of the model(s) can be improved by acquiring many pieces of sensor data (captured images H1) by repeating the data acquisition work S 1 by the agricultural robot 1.

After the trained model(s) is/are built (S2), the agricultural robot 1, which is to do work, is caused to travel autonomously (S3), and sensor data (captured image(s) H1) obtained via sensing by the optical sensor 5A during the autonomous travel is acquired (S4). After the acquisition of the captured image(s) H1 obtained during the autonomous travel, the location manager 41C applies the captured image(s) H1 to any of the first to seventh models to determine whether or not the agricultural robot 1 (traveling body 3) is located in the facility 100 (S5). If the location manager 41C determines the agricultural robot 1 (traveling body 3) as being located in the facility 100 (Yes in S5), the agricultural robot 1 travels autonomously in the facility 100 based on the captured image(s) H1 obtained via sensing by the optical sensor 5A (S6: autonomous travel).

The autonomous travel S6 is performed in a manner such that the location manager 41C prepares a travel route based on the sensor data (captured image(s) H1) obtained via sensing by the optical sensor 5A and that the travel controller 41A controls the travel (controls the autonomous travel) according to the travel route prepared by the location manager 41C.

Alternatively, the autonomous travel S6 is performed in a manner such that the location manager 41C estimates the location of the agricultural robot 1 (traveling body 3) (traveling body location) based on the sensor data (captured image(s) H1) and that the travel controller 41A compares the traveling body location with the map F1 to control the autonomous travel so that the agricultural robot 1 (traveling body 3) moves along the passage(s) 106.

Alternatively, the autonomous travel S6 is performed in a manner such that the travel controller 41A extracts passage(s) 106 from the sensor data (captured image(s) H1) obtained via sensing by the optical sensor 5A by image processing, and controls the autonomous travel so that the agricultural robot 1 (traveling body 3) moves along the passage(s) 106.

While the agricultural robot 1 is performing the autonomous travel S6, the work controller 41B refers to sensor data (captured image(s) H1) and, if crop(s) 2 is/are present in the vicinity of the agricultural robot 1, controls the robot hand 18 to do work such as harvesting, tapping to produce a sound, and/or the like (S7). Note that, during the autonomous travel, the map F1 stored in the controller 41 may be referred to and the location(s) of crop(s) may be determined from the map F1. Note that the travel controller 41A stops the autonomous travel S6 during the work.

In the description of the above embodiment, the captured image H1 is used as an example of the sensor data. Note, however, that the sensor data is not limited to the captured image H1, and may be scanned data obtained via sensing by a laser sensor (LiDAR). The description of the scanned data is omitted here because when the scanned data is used, the captured image H1 in the above embodiment need only be replaced with "scanned data" to obtain the description of an embodiment in which the scanned data is used.

An agricultural robot 1 includes a traveling body 3, a working unit 4 to do work relating to a crop, the working unit 4 being provided on the traveling body 3, an optical sensor 5A, 5B provided on the traveling body 3, and a location manager 41C to determine, based on sensor data obtained by the optical sensor 5A, 5B, whether or not the traveling body 3 is located in a facility 100 for cultivation of the crop 2, and the working unit 4 does the work relating to the crop 2 based on the working unit 4 if the location manager 41C determines the traveling body 3 as being located in the facility 100.

An assistance system for an agricultural robot 1 is an assistance system for an agricultural robot 1 including a traveling body 3, a working unit 4 to do work relating to a crop 2, the working unit 4 being provided on the traveling body 3, and an optical sensor 5A, 5B provided on the traveling body 3, wherein the agricultural robot 1 does the work relating to the crop 2 based on the working unit 4 if the traveling body 3 is located in a facility 100 for cultivation of the crop 2, the assistance system including a location manager 41C to determine, based on sensor data obtained by the optical sensor 5A, 5B, whether or not the traveling body 3 is located in the facility 100.

This makes it possible to easily know whether or not the traveling body 3 is located in the facility 100 based on sensor data acquired from the optical sensor(s) 5A and/or 5B, and allow the agricultural robot 1 to easily do the work relating to the crop 2 in the facility 100. That is, it is possible to allow the agricultural robot 1 to easily determine the conditions inside the facility 100 from sensor data, and possible to allow the agricultural robot to do work efficiently in the facility 100.

The location manager 41C determines the traveling body 3 as being located in the facility 100 if the sensor data includes a structure of the facility 100 and the structure matches a first profile as seen from an interior of the facility 100. This makes it possible to easily know whether or not the traveling body 3 is located in the facility 100 based on the first profile of structure(s) as seen from the interior of the facility 100.

The location manager 41C determines the traveling body 3 as being located in the facility 100 if the sensor data includes a second profile of a cultivation area 105 of the crop 2 in addition to the first profile. This makes it possible to easily determine whether the traveling body 3 is located in the facility 100 even if the conditions of the cultivation area(s) 105, i.e., the crop(s) 2 under cultivation in the cultivation area(s) 105, change as the crop(s) 2 grows.

The agricultural robot 1 or the assistance system further includes a travel controller 41A to control travel of the traveling body 3 based on the first profile and the second profile. With this, the travel controller 41A is capable of causing the traveling body 3 to travel appropriately in the facility 100 while referring to profile(s) (the first profile and/or the second profile) obtained via sensing of structure(s) in the facility 100 and the cultivation area(s) 105.

The agricultural robot 1 or the assistance system further includes a map generator 41D to generate a map of the interior of the facility 100 based on the first profile and on the crop 2 included in the second profile. This makes it possible to easily prepare a map of the interior of the facility 100 and possible to know the location(s) of crop(s) 2, the location(s) of structure(s), and/or the like.

The location manager 41C determines whether the structure matches the first profile based on a trained model and the sensor data. This makes it possible to easily know the shape of structure(s).

The location manager 41C performs reinforcement learning by acquiring the sensor data obtained during travel of the traveling body 3 in the facility 100. This makes it possible to perform reinforcement learning to further train the trained model(s) merely by causing the traveling body 3 to travel in the facility 100, and possible to improve the accuracy of the trained model(s).

The location manager 41C determines whether or not the traveling body 3 is located in the facility 100 based on sensor data including, as the structure, a frame 100 of the facility 100. This makes it possible to easily know whether the traveling body 3 is located in the facility 100 from sensor data obtained via sensing of the frame 100.

### Second embodiment

The following description discusses a second embodiment of the present invention with reference to drawings. The same elements as those of the first embodiment are assigned identical reference signs and specific descriptions therefor are omitted.

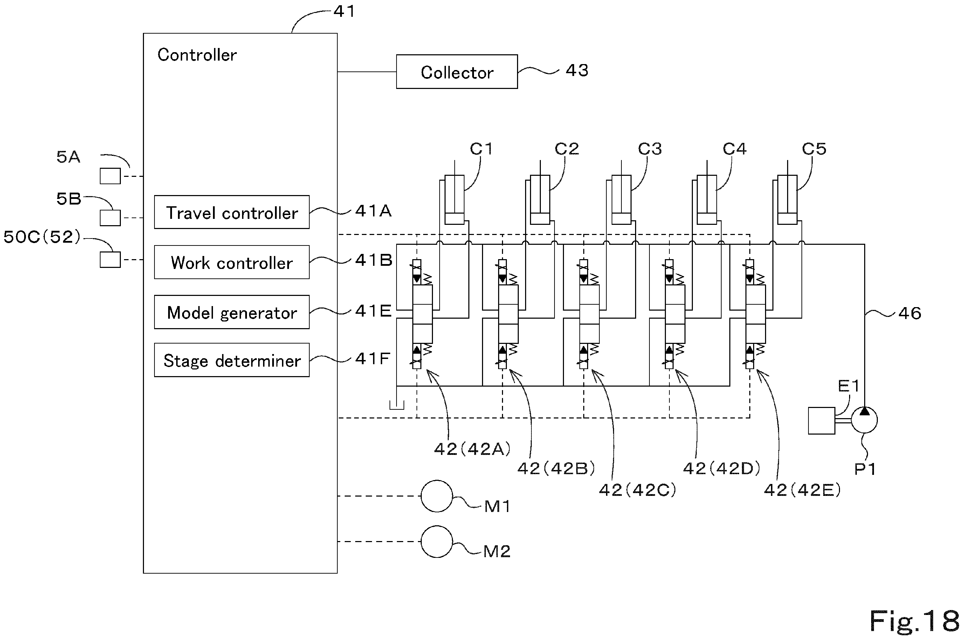

As illustrated in FIG. 18, an agricultural robot 1 includes a controller 41. The controller 41 is, for example, a microcomputer or the like including a central processing unit (CPU), an electrically erasable programmable read-only memory (EEPROM), and/or the like.

The controller 41 has connected thereto the optical sensors 5A and 5B, the tap sound sensor 50C, the travel motors M1, and the rotary motor M2. The controller 41 has also connected thereto a plurality of control valves 42. The control valves 42 include first control valves 42A, second control valves 42B, third control valves 42C, a fourth control valve 42D, and a fifth control valve 42E.

Each first control valve 42A controls a corresponding steering cylinder C1, each second control valve 42B controls a corresponding first lift cylinder C2, each third control valve 42C controls a corresponding second lift cylinder C3, the fourth control valve 42D controls the first arm cylinder C4, and the fifth control valve 42E controls the second arm cylinder C5.

The first control valves 42A, the second control valves 42B, the third control valves 42C, the fourth control valve 42D, and the fifth control valve 42E are each, for example, a solenoid valve actuated according to a control signal from the controller 41. More specifically, the first control valves 42A, the second control valves 42B, the third control valves 42C, the fourth control valve 42D, and the fifth control valve 42E are each a solenoid valve (three-way solenoid valve) whish achieves multi-position switching according to a control signal.

Upon output of a control signal from the controller 41 to the first control valves 42A, the first control valves 42A are switched to a predetermined position according to the control signal. Upon output of a control signal from the controller 41 to the second control valves 42B, the second control valves 42B are switched to a predetermined position according to the control signal.

Upon output of a control signal from the controller 41 to the third control valves 42C, the third control valves 42C are switched to a predetermined position according to the control signal. Upon output of a control signal from the controller 41 to the fourth control valve 42D, the fourth control valve 42D is switched to a predetermined position according to the control signal. Upon output of a control signal from the controller 41 to the fifth control valve 42E, the fifth control valve 42E is switched to a predetermined position according to the control signal.

The first control valves 42A, the second control valves 42B, the third control valves 42C, the fourth control valve 42D, and the fifth control valve 42E have a fluid passage 46 connected thereto, and the fluid passage 46 has connected thereto the hydraulic pump P1 to deliver hydraulic fluid.

With this, each first control valve 42A, switched between different positions, allows hydraulic fluid to be supplied selectively to either a bottom side chamber of a corresponding steering cylinder C1 or the rod side chamber of the corresponding steering cylinder C1, causing the steering cylinder C1 to extend or retract. Each second control valve 42B, switched between different positions, allows hydraulic fluid to be supplied selectively to either a bottom side chamber of a corresponding first lift cylinder C2 or a rod side chamber of the corresponding first lift cylinder C2, causing the first lift cylinder C2 to extend or retract. Each third control valve 42C, switched between different positions, allows hydraulic fluid to be supplied selectively to either a bottom side chamber of a corresponding second lift cylinder C3 or a rod side chamber of the corresponding second lift cylinder C3, causing the second lift cylinder C3 to extend or retract.

The fourth control valve 42D, switched between different positions, allows hydraulic fluid to be supplied selectively to either a bottom side chamber of the first arm cylinder C4 or a rod side chamber of the first arm cylinder C4, causing the first arm cylinder C4 to extend or retract. The fifth control valve 42E, switched between different positions, allows hydraulic fluid to be supplied selectively to either a bottom side chamber of the second arm cylinder C5 or a rod side chamber of the second arm cylinder C5, causing the second arm cylinder C5 to extend or retract.

The agricultural robot 1 includes a travel controller 41A. The travel controller 41A is electric/electronic circuit(s) provided in the controller 41, program(s) stored in the controller 41, and/or the like.

The travel controller 41A controls the traveling device 7. Specifically, the travel controller 41A controls the steering cylinders C1 (first control valves 42A) and the travel motors M1. The travel controller 41A outputs a control signal to one or more of the first control valves 42A to cause corresponding one or more steering cylinders C1 to extend or retract to change the steering direction of the traveling device 7 (machine body 6). The travel controller 41A outputs a control signal to one or more of the travel motors M1 to change the rotation speed or the rotation direction of the travel motor(s) M1 to change the speed of the traveling device 7 (machine body 6) or the direction of travel of the traveling device 7 (machine body 6).

The travel controller 41A may also control the raising/lowering, tilting, and/or the like of the machine body 6. For example, the travel controller 41A outputs a control signal to one or more of the second control valves 42B to cause corresponding one or more of the first lift cylinders C2 to extend or retract to change the raised state, lowered state, and/or tilting state of the machine body 6. The travel controller 41A outputs a control signal to one or more of the third control valves 42C to cause corresponding one or more of the second lift cylinders C3 to extend or retract to change the raised state, lowered state, or tilting state of the machine body 6.

As such, the agricultural robot 1 is controlled by the travel controller 41A to autonomously travel in, for example, the facility 100.

The agricultural robot 1 includes a work controller 41B. The work controller 41B is electric/electronic circuit(s) provided in the controller 41, program(s) stored in the controller 41, and/or the like.

The work controller 41B controls the manipulator (working unit) 4. Specifically, the work controller 41B controls the first arm cylinder C4, the second arm cylinder C5, and the rotary motor M2. The work controller 41B outputs a control signal to the fourth control valve 42D to cause the first arm cylinder C4 to extend or retract to cause the first arm assembly 31 to swing. The work controller 41B outputs a control signal to the fifth control valve 42E to cause the second arm cylinder C5 to extract or retract to cause the second arm assembly 32 to swing. The work controller 41B outputs a control signal to the rotary motor M2 to change the rotation direction of the rotary motor M2 to cause the manipulator (working unit) 4 to rotate.

As has been discussed, the work controller 41B is capable of moving the robot hand 18 to any (desired) position. Specifically, it is possible to move the robot hand 18 to a target position by the movement of the robot hand 18 along a circumference centered on the rotation axis J1 caused by the rotation of the rotating frame 21, raising/lowering of the robot hand 18 caused by upward/downward swinging movement of the first arm assembly 31, and the movement of the robot hand 18 toward/away from the traveling body 3 caused by the swinging movement of the second arm assembly 32.

The work controller 41B controls the actuator 51B (tapping member 51A). For example, the work controller 41B performs the following control (tapping control): the work controller 41B outputs a control signal to the actuator 51B to actuate the actuator 51B to cause the tapping member 51A to tap the crop 2.

As illustrated in FIG. 18, the agricultural robot 1 includes a collector 43. The collector 43 acquires data of a sound acquired by a microphone (sound recording mechanism 52) when a crop 2 is tapped with the tapping member 51A (such data is "sound data"). The collector 43 includes a memory which is a nonvolatile memory and/or the like and which stores sound data.

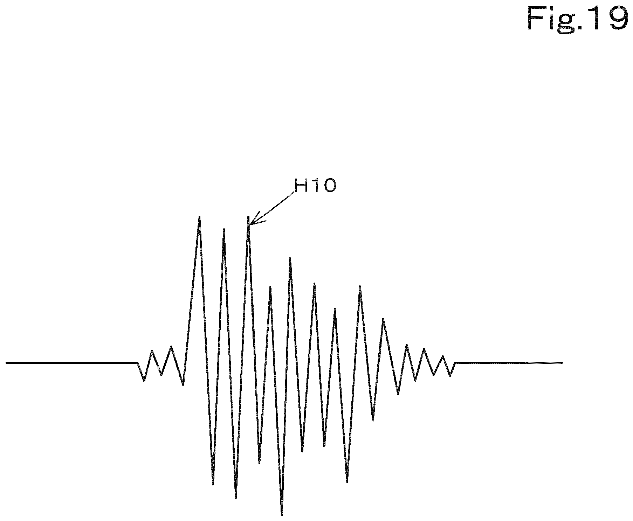

As illustrated in FIG. 19, the collector 43 acquires, as sound data, a waveform H10 acquired by a microphone (sound recording mechanism 52) when a crop 2 is tapped. It is noted here that, before or after the crop 2 is tapped, the collector 43 acquires ambient sound (noise) around the to-be-tapped or the tapped crop 2 via the microphone (sound recording mechanism 52), and analyzes the acquired noise. The collector 43 determines, using the analysis result, whether or not the waveform H10 includes a waveform corresponding to the noise (noise waveform). If the waveform H10 includes the noise, the collector 43 removes the noise waveform from the waveform H10 to obtain a waveform H10 corresponding to the tapping. That is, the collector 43 performs the step of removing noise present when the crop 2 is tapped.

Whether or not a waveform is a noise waveform is determined (estimated) using a noise estimation model (first model). The noise estimation model is used to estimate whether a waveform is noise based on the amplitude and/or frequency of the waveform and/or changes in the waveform. The noise removal model is built in the following manner: sound in the facility 100 is acquired while crops 2 are not being tapped, the acquired sound is inputted into a computer, and deep learning is performed using artificial intelligence on the computer.

In the above-described embodiment, noise is removed by pre-acquiring ambient sound before and/or after a crop 2 is tapped and analyzing the ambient sound and estimating a noise waveform using the noise estimation model (first model). Alternatively, a noise estimation model (second model) for determination of whether or not a waveform H10 obtained when tapping is performed includes a noise waveform is used instead of determining the noise based on the waveform obtained before or after the tapping. The noise estimation model (second model) is built by inputting a waveform H10 obtained when tapping is performed into a computer and performing deep learning using artificial intelligence on the computer. Also with the noise estimation model (second model), noise waveform(s) in the waveform H10 is/are estimated based on the amplitude and/or frequency of the waveform H10 and/or changes in the waveform H10. After the estimation of the noise waveform using the noise estimation model (second model), the collector 43 removes the noise waveform from the waveform H10 using the estimation result, as described earlier.

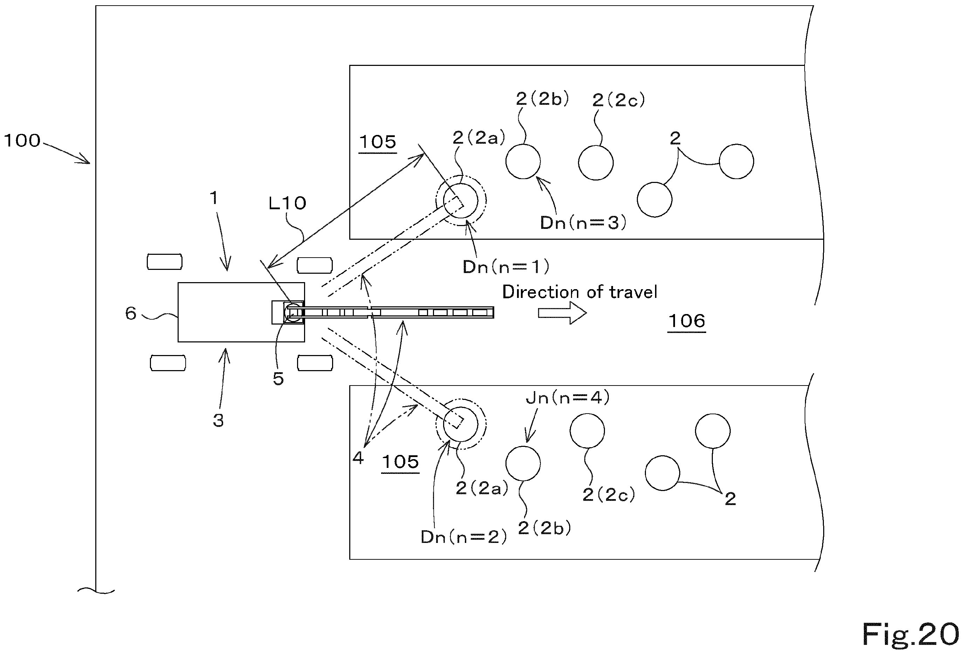

As illustrated in FIG. 20. the agricultural robot 1 (traveling body 3) is controlled by the travel controller 41A to travel autonomously in the facility 100. During the autonomous travel, the work controller 41B causes the tapping member 51A to tap a crop 2, and the collector 43 acquires (stores) a waveform H10 obtained when the crop 2 is tapped. The waveforms H10 are acquired (stored) on a per-crop-2 basis.

For example, the controller 41 (travel controller 41A) controls the agricultural robot 1 to move to the vicinity of a crop 2a. When the agricultural robot 1 reaches the vicinity of the crop 2a, the work controller 41B performs tapping control and/or the like such that the crop 2a is tapped, and the collector 43 acquires data of a sound that the crop 2a produces when tapped (such data is "sound data").

Next, after the acquisition of the sound data from the crop 2a, the controller 41 (travel controller 41A) controls the traveling body 3 to move toward another crop 2b from which sound data has not been acquired, to bring the agricultural robot 1 closer to the crop 2b. When the agricultural robot 1 reaches the vicinity of the crop 2b, the work controller 41B performs tapping control and/or the like such that the crop 2b is tapped, and the collector 43 acquires data (sound data) of a sound that the crop 2b produces when tapped.

That is, the controller 41 (travel controller 41A) performs the following control repeatedly until sound data has been acquired from all the crops 2 in the facility 100: after the acquisition of sound data by the collector 43, the controller 41 (travel controller 41A) causes the traveling body 3 to move toward a location Dn (n = 1, 2, 3 ... or the like) where another crop 2b, 2c, ... or the like from which sound data has not been acquired is cultivated (such a location may be referred to as "cultivation location Dn").

The controller 41 causes the agricultural robot 1 (traveling body 3) to move toward a cultivation location Dn based on sensor data obtained by the optical sensor 5A. When the optical sensor 5A is an imager, the sensor data is a captured image (image data). When the optical sensor 5A is a laser sensor (LiDAR), the sensor data is scanned data including the distance and direction from the optical sensor 5A to the sensed target (object).

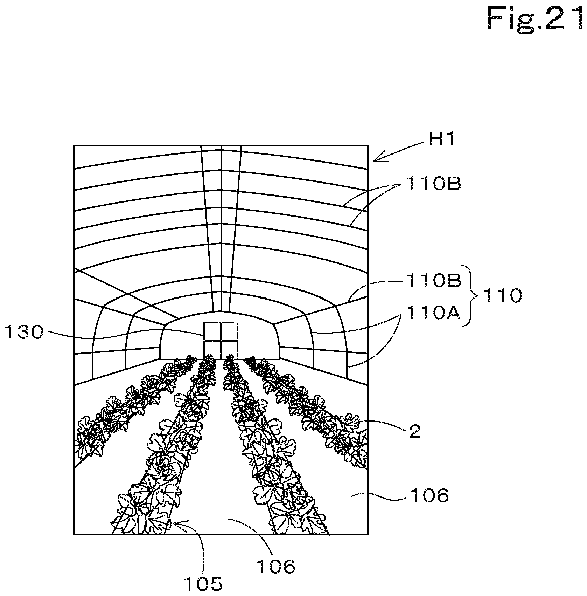

As illustrated in FIG. 21, the controller 41 refers to sensor data (captured image H1), and determines whether or not the captured image H1 includes crop(s) 2 by subjecting the sensor data (captured image H1) to feature matching and/or the like.

If the controller 41 determines the first sensor data H10 as including a crop 2, the controller 41 calculates a relative distance L10 between the crop 2 and the agricultural robot 1 (traveling body 3) (see FIG. 20). If the controller 41 determines the captured image H1 as including a crop 2, as illustrated in FIG. 16A, for example, the controller 41 compares the size of an image H2 (the number of pixels in the vertical direction, the number of pixels in the horizontal direction) of the crop 2 which is a subject included in the captured image H1 with the size of a preset reference frame F10 (the number of pixels in the vertical direction, the number of pixels in the horizontal direction). If the image H2 of the crop 2 is smaller than that of the reference frame F10, the controller 41 determines the relative distance L10 as being longer than a predetermined reference distance L11 corresponding to the reference frame F10. That is, the controller 11 estimates the crop 2 as being located at a distance greater than the reference distance L11 from the agricultural robot 1 (traveling body 3). In contrast, if the image H2 of the crop 2 is larger than that of the reference frame F10, the controller 41 determines the relative distance L10 as being shorter than the reference distance L11. That is, the controller 41 determines the crop 2 as being located at a distance less than the reference distance L11 from the agricultural robot 1 (traveling body 3).

That is, the controller 41 compares the size of the image H2 of the crop 2 and the size of the reference frame F10 and, based on the ratio between the size of the image H2 of the crop 2 and the size of the reference frame F10 and on the reference distance L11, determines the relative distance L10 between the current location of the agricultural robot 1 and the crop 2. Specifically, the controller 41 calculates, at the current location of the agricultural robot 1, a distance (travel distance) to be traveled by the agricultural robot 1 from the current location so that the relative distance L10 matches the reference distance L11, and the travel controller 41A causes the agricultural robot 1 (traveling body 3) to travel forward or rearward by the travel distance. Note that the reference distance L11 is shorter than the distance from the distal portion (robot hand 18) of the manipulator (working unit) 4 to the traveling body 3 when the robot hand 18 is fully separated from the traveling body 3. That is, the reference distance L11 is shorter than the stroke (range of movement) of the manipulator (working unit) 4 (distance from the traveling body 3 to the distal portion of the robot hand 18 of the manipulator (working unit) 4).

In summary, the travel controller 41A causes the agricultural robot 1 (traveling body 3) to move toward the cultivation location Dn of the crop so that the relative distance L10 between the crop 2 and the agricultural robot 1 (traveling body 3), when the image H2 of the crop 2 and the reference frame F10 match each other, is a predetermined distance. Note that in the above-described method, the position of a lens relative to an image sensor is not changed (focusing is not performed).

In the above-described embodiment, the agricultural robot 1 (traveling body 3) is caused to move toward the cultivation location Dn of the crop 2 to a location at which the relative distance L10 between the crop 2 and the agricultural robot 1 (traveling body 3) is a predetermined distance, using the captured image H1. Note, however, that when the optical sensor 5A is a laser sensor (LiDAR), the controller 41 (travel controller 41A) calculates the distance (relative distance L10) between the current location of the agricultural robot 1 (traveling body 3) and the crop 2 using scanned data and causes the agricultural robot 1 (traveling body 3) to travel forward or rearward so that the calculated relative distance L10 matches the reference distance L11.

When the relative distance L10 between the agricultural robot 1 (traveling body 3) and the crop 2 reaches the reference distance L11, that is, when the agricultural robot 1 reaches the vicinity of the cultivation location Dn of a crop 2, the work controller 41B brings the distal portion (robot hand 18) of the manipulator (working unit) 4 closer to the crop 2 and performs tapping control. The collector 43 stores sound data obtained when the crop 2 is tapped.

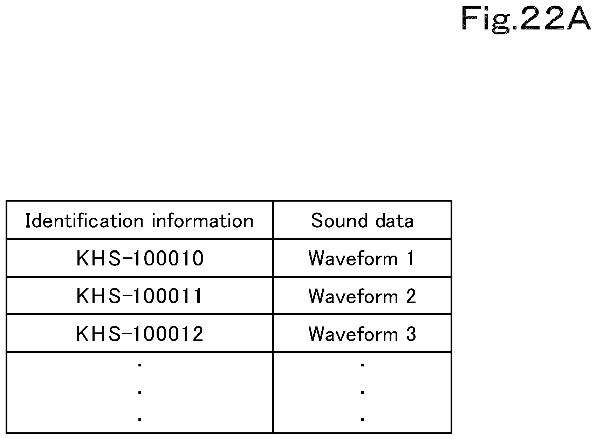

As shown in FIG. 22A, when the collector 43 stores sound data, the collector 43 stores such sound data and identification information for identification of the crop 2 (crop 2a, 2b, 2c ... or the like) as tap sound information in which the sound data and the identification information are associated with each other. The tap sound information can be obtained by, for example, providing an identifier member for recognition of identification information such as a two-dimensional barcode or a marker, associated with a crop 2, in the vicinity of the crop 2 and capturing an image of the identifier member (two-dimensional barcode, marker) with an imager when the crop 2 is tapped to produce a sound.

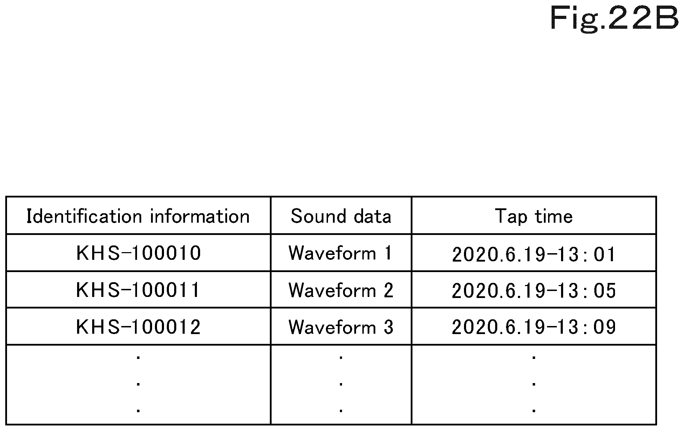

Alternatively, as shown in FIG. 22B, the collector 43 may store identification information, sound data, and the time (month, day, time) at which the crop 2 was tapped to produce a sound (such time may be hereinafter referred to as "tap time") as tap sound information in which the identification information, the sound data, and the tap time are associated with each other. For example, a clock (timer) to measure time is provided in the agricultural robot 1, the time at which the crop 2 was tapped to produce a sound (tap time) is measured by the clock, and the measured tap time, identification information, and sound data are stored as tap sound information in which the tap time, the identification information, and the sound data are associated with each other.

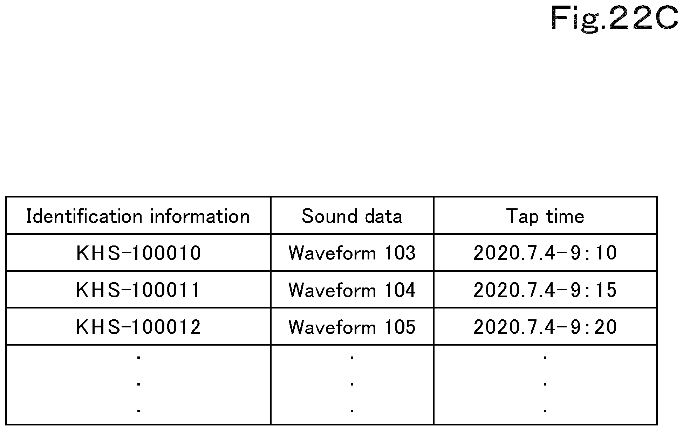

Alternatively, the collector 43 may, in the case where the work controller 41B performs tapping control in harvesting a crop 2 with the robot hand 18, store sound data obtained when the crop 2 is tapped to produce a sound under the tapping control (sound data at the time of harvesting), identification information, and tap time as tap sound information in which the sound data, the identification information, and the tap time are associated with each other, as shown in FIG. 22C. In the case of FIG. 22C, the time when the crop 2 was tapped and the time when the crop 2 was harvested are the same, and therefore the tap time can be regarded as the time at which the crop 2 was harvested (harvest time).

With regard to sound data obtained from watermelon, melon, or the like in their harvesting stage, the frequency of the waveform H10 obtained from the sound data tends to be low and the sound tends to be low. The collector 43 may, if the frequency of the waveform H10 is lower than a predetermined frequency, store the waveform H10 as sound data indicative of harvesting stage.

The agricultural robot 1 may include a model generator 41E as illustrated in FIG. 18. The model generator 41E is electric/electronic circuit(s) provided in the controller 41, program(s) stored in the controller 41, and/or the like.

The model generator 41E generates, based on a plurality of pieces of sound data collected (acquired) by the collector 43, a model to estimate the growth state of a crop. The model generator 41E acquires tap sound information (sound data and identification information) as shown in FIG. 22A. In such a case, the model generator 41E performs deep learning using artificial intelligence with regard to the loudness of the tap sound (amplitude of the waveform), the pitch of the tap sound (frequency), and/or the degree of change in the waveform of the tap sound (tone) of the plurality of pieces of sound data (waveforms W10) to build a trained model to estimate the growth state (first growth model).

Alternatively, when building a growth model, the model generator 41E acquires not only the plurality of pieces of sound data (waveforms W10) but also the tap times associated with the plurality of pieces of sound data as shown in FIG. 22B and, based on the tap times, categorizes the plurality of pieces of sound data (waveforms W10) into the initial stage of growth, the intermediate stage of growth, and the last stage of growth. The model generator 41E may perform deep learning with regard to a plurality of pieces of sound data belonging to each of the groups (initial stage, intermediate stage, and last stage) to build a trained growth model to estimate the growth state (second growth model).

Alternatively, the model generator 41E acquires sound data, identification information, and harvest time as tap sound information as shown in FIG. 22C, and performs deep learning with regard to sound data in association with the harvest time to build a trained model to estimate the harvest time as the growth state (third growth model).

In the above-described embodiment, data (sound data) of a sound produced by tapping is acquired during travel of the agricultural robot 1 (traveling body 3) in the facility 100. The acquisition of sound data from the crop 2 may be performed repeatedly.

In such a case, the model generator 41E may perform reinforcement learning when tapping to produce a sound is performed as the agricultural robot 1 (traveling body 3) is caused to travel (upon each acquisition of sound data by the collector 43).

The agricultural robot 1 may include a stage determiner 41F as illustrated in FIG. 18. The stage determiner 41F is electric/electronic circuit(s) provided in the controller 41, program(s) stored in the controller 41, and/or the like.

The stage determiner 41F determines, based on trained model(s) (the first growth model, the second growth model, and/or the third growth model) and sound data representative of the tap sound obtained during work (sound produced when tapping was performed), whether or not the tapped crop 2 is in its harvesting stage.

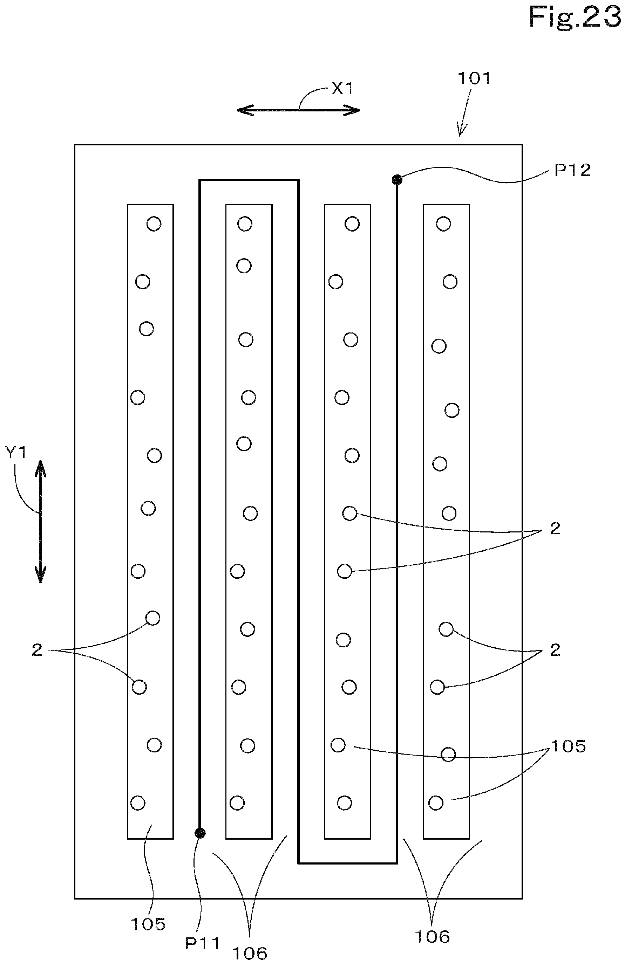

As illustrated in FIG. 23, the agricultural robot 1 is caused to travel through passage(s) 106 between cultivation areas 105 in the facility 100. During work, the controller 41 (the travel controller 41A and/or the work controller 41B) refers to sensor data (captured image H1 and/or scanned data) obtained from the optical sensor 5A, and causes the agricultural robot 1 to travel along the cultivation areas 105 from the work start point P11 to the work end point P12.

As illustrated in FIG. 20, the controller 41 (the travel controller 41A and/or the work controller 41B) analyzes the sensor data and, if the controller 41 determines the agricultural robot 1 as being in the vicinity of a cultivation location Dn of a crop 2, the travel controller 41A temporarily stops the travel of the agricultural robot 1. The work controller 41B controls the manipulator 4 to bring the robot hand 18 closer to the crop 2. The work controller 41B performs tapping control with the robot hand 18 in proximity to the crop 2 so that the crop 2 is tapped. The collector 43 acquires and stores sound data representative of the sound produced when tapping was performed, and the stage determiner 41F applies the sound data to at least one of the first, second, and third growth models.

For example, when the sound data representative of the sound produced when tapping was performed is applied to the first growth model and the first growth model outputs, as the growth state, a result indicating that the stage of the crop 2 is the same as its harvesting stage, the stage determiner 41F determines the crop 2 as being in its harvesting stage and the work controller 41B controls the robot hand 18 to harvest the crop 2. On the other hand, if the first growth model outputs, as the growth state, a result indicating that the stage of the crop 2 is not the same as its harvesting stage, the stage determiner 41F determines the crop 2 as not being in its harvesting state and the work controller 41B controls the robot hand 18 to move away from the tapped crop 2 not to harvest the crop 2.

Alternatively, when the sound data representative of the sound produced when tapping was performed is applied to the second growth model and the second growth model outputs, as the growth state, a result indicating that the crop 2 is in the late stage of growth, the stage determiner 41F determines the crop 2 as being in its harvesting stage and the work controller 41B controls the robot hand 18 to harvest the crop 2. If the second growth model outputs, as the growth state, a result indicating that the crop 2 is in the initial or intermediate stage of growth, the stage determiner 41F determines the crop 2 as not being in its harvesting state and the work controller 41B controls the robot hand 18 to move away from the tapped crop 2 not to harvest the crop 2.

Alternatively, when the sound data representative of the sound produced when tapping was performed is applied to the third growth model and the third growth model outputs, as the growth state, a result indicative of the harvesting stage, the stage determiner 41F determines the crop 2 as being in its harvesting stage and the work controller 41B controls the robot hand 18 to harvest the crop 2. On the other hand, if the third growth model outputs, as the growth state, a result not indicative of the harvesting stage, the stage determiner 41F determines the crop 2 as not being in its harvesting state and the work controller 41B controls the robot hand 18 to move away from the tapped crop 2 not to harvest the crop 2.

As has been described, the agricultural robot 1 is caused to travel along cultivation area(s) 105 from the work start point P11 to the work end point P12, sound data obtained by tapping a crop 2 during the travel is applied to trained model(s) to determine whether or not the crop 2 is in its harvesting stage, and the crop 2 is harvested only when the crop 2 is determined by the trained model(s) as being in its harvesting stage.

In the above-described embodiment, the stage determiner 41F determines whether or not the tapped crop 2 is its harvesting stage based on trained model(s) (the first growth model, the second growth model, and/or the third growth model) and sound data representative of the tap sound obtained during work (sound produced when tapping was performed). Note, however, that whether or not the crop 2 is in its harvesting stage may be determined without using trained models.

The stage determiner 41F refers to a database (past actual harvest information) of a collection of sound data obtained during a stage corresponding to the harvesting stage in the collector 43, and calculates a reference value such as the average loudness of the tap sound (amplitude of the waveform), the average pitch of the tap sound (frequency), and/or the average degree of change in the waveform (tone) of the tap sound of the pieces of sound data indicative of the harvesting stage. The stage determiner 41F determines whether or not the loudness of the tap sound (amplitude of the waveform), the pitch of the tap sound (frequency), and the degree of change in the waveform (tone) of the tap sound, in the sound data obtained by tapping work during the travel of the agricultural robot 1 from the work start point P11 to the work end point P12, are each within a predetermined range from the reference (average). If the loudness of the tap sound (amplitude of the waveform), the pitch of the tap sound (frequency), and the degree of change in the waveform (tone) of the tap sound are each within the predetermined range, the stage determiner 41F determines the crop 2 as being in its harvesting stage. If the loudness of the tap sound (amplitude of the waveform), the pitch of the tap sound (frequency), and/or the degree of change in the waveform (tone) of the tap sound is/are outside the predetermined range(s), the stage determiner 41F determines the crop 2 as not being in its harvesting stage.

In the above-described variation, the agricultural robot 1 is caused to travel along cultivation area(s) 105 from the work start point P11 to the work end point P12, sound data obtained by tapping a crop 2 during the travel is compared with past actual harvest information, and the crop 2 is harvested when the sound data is within a predetermined range from the reference (average) of the past actual harvest information.

In the above-described variation, an example case in which the average of the past actual harvest information is determined is discussed. Note, however, that the reference does not need to be the average, and may be variation such as standard deviation. There is no limitation on the reference.

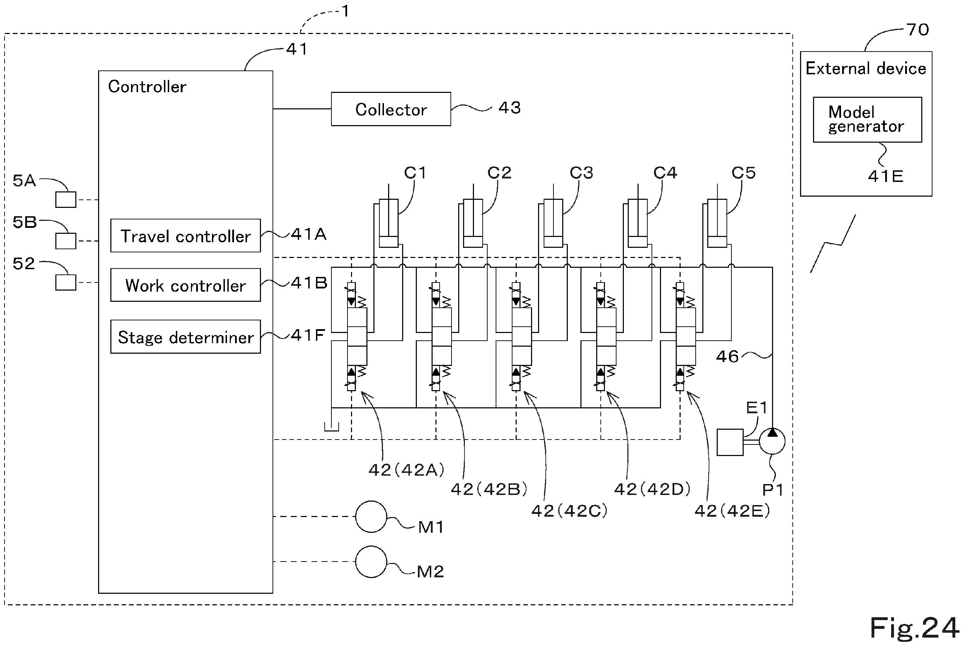

FIG. 24 illustrates a variation of the agricultural robot 1 and the assistance system for an agricultural robot. As illustrated in FIG. 24, the collector 43 may be a communication device capable of transmitting sound data to an external device 70 such as a server, a mobile terminal, and/or a personal computer. In such a case, the collector 43, which is a communication device, transmits, to the external device 70, sound data (waveform H10) representative of a sound that a crop 2 produced when tapped. The external device 70 includes the model generator 41E and builds trained model(s) to estimate growth state based on the sound data transmitted from the agricultural robot 1 (communication device). Note that the method of building the trained model(s) is the same as those described in the foregoing embodiment.

Once the model generator 41E has built the trained model(s), the external device 70 transmits the built trained model(s) (the first growth model, the second growth model, and/or the third growth model) to the agricultural robot 1 (communication device). Once the agricultural robot 1 (communication device) has received the trained model(s) (the first growth model, the second growth model, and/or the third growth model), the controller 41 stores the trained model(s). The stage determiner 41F determines whether or not the tapped crop 2 is in its harvesting stage based on the trained model(s) in the controller 41 and the sound data obtained when the tapping was performed, similarly to the foregoing embodiments. The work controller 41B performs control to harvest the tapped crop 2 if the tapped crop 2 is determined as being in its harvesting stage, and performs control no to harvest the tapped crop 2 if the tapped crop 2 is determined as not being its harvesting stage.

An agricultural robot 1 includes a traveling body 3 configured to move toward a cultivation location Dn which is a location where a crop 2 is cultivated, a manipulator 4 configured to bring a distal portion thereof closer to the crop 2 when the traveling body 3 reaches a vicinity of the cultivation location Dn, the manipulator 4 being provided on the traveling body 3, a tap sound sensor 50C including a tapping mechanism 51 to tap the crop 2, the tapping mechanism 51 being provided on the distal portion of the manipulator 4, and a microphone (sound recording mechanism 52) to acquire a sound that the crop 2 produces when tapped with the tapping mechanism 51, and a collector 63 to acquire data of the sound acquired by the microphone (sound recording mechanism 52).

With this, when there is a need to know the growth or the like of a crop 2 using data of a sound, it is possible to easily acquire data of a sound that the crop 2 produces when tapped merely by moving the traveling body 3 close to the cultivation location Dn of the crop 2, and possible to provide assistance in knowing the growth of the crop 2. In particular, when the cultivation area of the crop 2 (planted area) is within the facility 100, it is possible to efficiently acquire data of a sound that the crop 2 produces when tapped, because there is little noise.

The agricultural robot 1 further includes a controller 41 to, at least after acquisition of the data by the collector 63, control the traveling body 3 to move toward a cultivation location Dn of another crop 2 from which data of a sound produced thereby has not been acquired. This allows the controller 41 to efficiently acquire data of sounds when there are a plurality of the crops 2.

The agricultural robot 1 further includes an optical sensor 5A, 5B provided on the traveling body 3. The controller 41 controls, based on sensor data obtained by the optical sensor 5A, 5B, the traveling body 3 to move toward the cultivation location Dn of the other crop 2 such that a distance between the other crop 2 and the traveling body 3 is a predetermined reference distance. This makes it possible to cause the agricultural robot 1 (traveling body 3) to travel to the vicinity of the cultivation location Dn, and possible to more quickly and accurately move the distal portion of the manipulator 4 close to the crop 2.

The agricultural robot 1 further includes a model generator 41E to, based on a plurality of pieces of the data acquired by the collector 63, generate a model to estimate a crop growth state. This makes it possible to easily generate a model to estimate the growth state of the crop 2 from the acquired plurality of pieces of data of sounds.

The model generator 41E performs reinforcement learning upon each data acquisition by the collector 63. This makes it possible to perform reinforcement learning upon each data acquisition by the collector 63 when, for example, the agricultural robot 1 (traveling body 3) does work with respect to the crop(s) 2, and possible to build a more accurate model.

The agricultural robot 1 further includes a robot hand 18 to harvest the crop 2 by holding the crop 2, and a stage determiner 41F to determine, based on the model and the data, whether or not the tapped crop 2 is in a harvesting stage. The robot hand 18 harvests the tapped crop 2 if the stage determiner 41F determines the tapped crop 2 as being in the harvesting stage, and does not harvest the tapped crop 2 if the stage determiner 41F determines the tapped crop 2 as not being in the harvesting stage.

This makes it possible to easily know whether the crop 2 is in its harvesting stage during the work to harvest the crop 2, and possible to efficiently harvest only the crop(s) 2 in its harvesting stage.

The collector 63 is a memory to store the data or a communication device to transmit the data to an external terminal. This makes it possible to store and collect data of sounds that crops 2 produce when tapped and to transmit the collected data of sounds to an external terminal.

An assistance system for an agricultural robot 1 is an assistance system for an agricultural robot 1 including a traveling body 3 configured to move toward a cultivation location Dn which is a location where a crop 2 is cultivated, a manipulator 4 configured to bring a distal portion thereof closer to the crop 2 when the traveling body 3 reaches a vicinity of the cultivation location Dn, the manipulator 4 being provided on the traveling body 3, and a tap sound sensor 50C including a tapping mechanism 51 to tap the crop 2, the tapping mechanism 51 being provided on the distal portion of the manipulator 4, and a microphone (sound recording mechanism 52) to acquire a sound that the crop 2 produces when tapped with the tapping mechanism 51, the assistance system including a collector 63 to acquire data of the sound acquired by the microphone (sound recording mechanism 52).

With this, when there is a need to know the growth or the like of a crop 2 using data of a sound, it is possible to easily acquire data of a sound that the crop 2 produces when tapped merely by moving the traveling body 3 close to the cultivation location Dn of the crop 2, and possible to provide assistance in knowing the growth of the crop 2. In particular, when the cultivation area of the crop 2 (planted area) is within the facility 100, it is possible to efficiently acquire data of a sound that the crop 2 produces when tapped, because there is little noise.

The assistance system further includes a controller 41 to, at least after acquisition of the data by the collector 63, control the traveling body 3 to move toward a cultivation location Dn of another crop 2 from which data of a sound produced thereby has not been acquired. This allows the controller 41 to efficiently acquire data of sounds when there are a plurality of the crops 2.

The assistance system further includes an optical sensor 5A, 5B provided on the traveling body 3. The controller 41 controls, based on sensor data obtained by the optical sensor 5A, 5B, the traveling body 3 to move toward the cultivation location Dn of the other crop 2 such that a distance between the other crop 2 and the traveling body 3 is a predetermined reference distance. This makes it possible to cause the agricultural robot 1 (traveling body 3) to travel to the vicinity of the cultivation location Dn, and possible to more quickly and accurately move the distal portion of the manipulator 4 close to the crop 2.

The assistance system further includes a model generator 41E to, based on a plurality of pieces of the data acquired by the collector 63, generate a model to estimate a crop growth state. This makes it possible to easily generate a model to estimate the growth state of the crop 2 from the acquired plurality of pieces of data of sounds.

The assistance system further includes a work controller to control a robot hand 18 configured to harvest the crop 2 by holding the crop 2, and a stage determiner 41F to determine, based on the model and the data, whether or not the tapped crop 2 is in a harvesting stage. The work controller controls the robot hand 18 to harvest the tapped crop 2 if the stage determiner 41F determines the tapped crop 2 as being in the harvesting stage, and controls the robot hand 18 not to harvest the tapped crop 2 if the stage determiner 41F determines the tapped crop 2 as not being in the harvesting stage.

This makes it possible to easily know whether the crop 2 is in its harvesting stage during the work to harvest the crop 2, and possible to efficiently harvest only the crop(s) 2 in its harvesting stage.

### Third embodiment

The following description discusses a third embodiment of the present invention with reference to drawings. The same elements as those of the first embodiment are assigned identical reference signs and specific descriptions therefor are omitted.

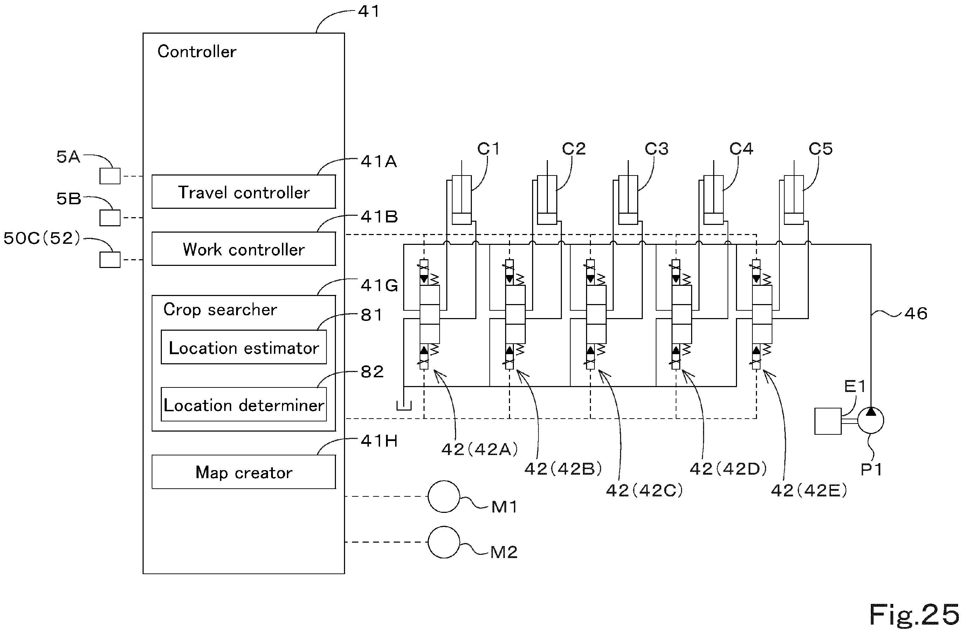

As illustrated in FIG. 25, an agricultural robot 1 includes a controller 41. The controller 41 is, for example, a microcomputer or the like including a central processing unit (CPU), an electrically erasable programmable read-only memory (EEPROM), and/or the like.

The controller 41 has connected thereto the optical sensors 5A and 5B, the tap sound sensor 50C, the travel motors M1, and the rotary motor M2. The controller 41 has also connected thereto a plurality of control valves 42. The control valves 42 include first control valves 42A, second control valves 42B, third control valves 42C, a fourth control valve 42D, and a fifth control valve 42E.

Each first control valve 42A controls a corresponding steering cylinder C1, each second control valve 42B controls a corresponding first lift cylinder C2, each third control valve 42C controls a corresponding second lift cylinder C3, the fourth control valve 42D controls the first arm cylinder C4, and the fifth control valve 42E controls the second arm cylinder C5.

The first control valves 42A, the second control valves 42B, the third control valves 42C, the fourth control valve 42D, and the fifth control valve 42E are each, for example, a solenoid valve actuated according to a control signal from the controller 41. More specifically, the first control valves 42A, the second control valves 42B, the third control valves 42C, the fourth control valve 42D, and the fifth control valve 42E are each a solenoid valve (three-way solenoid valve) whish achieves multi-position switching according to a control signal.

Upon output of a control signal from the controller 41 to the first control valves 42A, the first control valves 42A are switched to a predetermined position according to the control signal. Upon output of a control signal from the controller 41 to the second control valves 42B, the second control valves 42B are switched to a predetermined position according to the control signal.

Upon output of a control signal from the controller 41 to the third control valves 42C, the third control valves 42C are switched to a predetermined position according to the control signal. Upon output of a control signal from the controller 41 to the fourth control valve 42D, the fourth control valve 42D is switched to a predetermined position according to the control signal. Upon output of a control signal from the controller 41 to the fifth control valve 42E, the fifth control valve 42E is switched to a predetermined position according to the control signal.

The first control valves 42A, the second control valves 42B, the third control valves 42C, the fourth control valve 42D, and the fifth control valve 42E have a fluid passage 46 connected thereto, and the fluid passage 46 has connected thereto the hydraulic pump P1 to deliver hydraulic fluid.

With this, each first control valve 42A, switched between different positions, allows hydraulic fluid to be supplied selectively to either a bottom side chamber of a corresponding steering cylinder C1 or a rod side chamber of the corresponding steering cylinder C1, causing the steering cylinder C1 to extend or retract. Each second control valve 42B, switched between different positions, allows hydraulic fluid to be supplied selectively to either a bottom side chamber of a corresponding first lift cylinder C2 or a rod side chamber of the corresponding first lift cylinder C2, causing the first lift cylinder C2 to extend or retract. Each third control valve 42C, switched between different positions, allows hydraulic fluid to be supplied selectively to either a bottom side chamber of a corresponding second lift cylinder C3 or a rod side chamber of the corresponding second lift cylinder C3, causing the second lift cylinder C3 to extend or retract.

The fourth control valve 42D, switched between different positions, allows hydraulic fluid to be supplied selectively to either a bottom side chamber of the first arm cylinder C4 or a rod side chamber of the first arm cylinder C4, causing the first arm cylinder C4 to extend or retract. The fifth control valve 42E, switched between different positions, allows hydraulic fluid to be supplied selectively to either a bottom side chamber of the second arm cylinder C5 or a rod side chamber of the second arm cylinder C5, causing the second arm cylinder C5 to extend or retract.

The agricultural robot 1 includes a travel controller 41A. The travel controller 41A is electric/electronic circuit(s) provided in the controller 41, program(s) stored in the controller 41, and/or the like.

The travel controller 41A controls the traveling device 7. Specifically, the travel controller 41A controls the steering cylinders C1 (first control valves 42A) and the travel motors M1. The travel controller 41A outputs a control signal to one or more of the first control valves 42A to cause corresponding one or more steering cylinders C1 to extend or retract to change the steering direction of the traveling device 7 (machine body 6). The travel controller 41A outputs a control signal to one or more of the travel motors M1 to change the rotation speed or the rotation direction of the travel motor(s) M1 to change the speed of the traveling device 7 (machine body 6) or the direction of travel of the traveling device 7 (machine body 6).

The travel controller 41A may also control the raising/lowering, tilting, and/or the like of the machine body 6. For example, the travel controller 41A outputs a control signal to one or more of the second control valves 42B to cause corresponding one or more of the first lift cylinders C2 to extend or retract to change the raised state, lowered state, and/or tilting state of the machine body 6. The travel controller 41A outputs a control signal to one or more of the third control valves 42C to cause corresponding one or more of the second lift cylinders C3 to extend or retract to change the raised state, lowered state, or tilting state of the machine body 6.

As such, the agricultural robot 1 is controlled by the travel controller 41A to autonomously travel in, for example, the facility 100.

The agricultural robot 1 includes a work controller 41B. The work controller 41B is electric/electronic circuit(s) provided in the controller 41, program(s) stored in the controller 41, and/or the like.

The work controller 41B controls the manipulator (working unit) 4. Specifically, the work controller 41B controls the first arm cylinder C4, the second arm cylinder C5, and the rotary motor M2. The work controller 41B outputs a control signal to the fourth control valve 42D to cause the first arm cylinder C4 to extend or retract to cause the first arm assembly 31 to swing. The work controller 41B outputs a control signal to the fifth control valve 42E to cause the second arm cylinder C5 to extract or retract to cause the second arm assembly 32 to swing. The work controller 41B outputs a control signal to the rotary motor M2 to change the rotation direction of the rotary motor M2 to cause the manipulator (working unit) 4 to rotate.

As has been discussed, the work controller 41B is capable of moving the robot hand 18 to any (desired) position. Specifically, it is possible to move the robot hand 18 to a target position by the movement of the robot hand 18 along a circumference centered on the rotation axis J1 caused by the rotation of the rotating frame 21, raising/lowering of the robot hand 18 caused by upward/downward swinging movement of the first arm assembly 31, and the movement of the robot hand 18 toward/away from the traveling body 3 caused by the swinging movement of the second arm assembly 32.

The work controller 41B controls the actuator 51B (tapping member 51A). For example, the work controller 41B performs the following control (tapping control): the work controller 41B outputs a control signal to the actuator 51B to actuate the actuator 51B to cause the tapping member 51A to tap the crop 2.

The agricultural robot 1 includes a crop searcher 41G. The crop searcher 41G is electric/electronic circuit(s) provided in the controller 41, program(s) stored in the controller 41, and/or the like.

The crop searcher 41G searches for a crop 2 based on first sensor data obtained by the first optical sensor 5A and second sensor data obtained by the second optical sensor 5B. When the optical sensor 5A is an imager, the first sensor data is a captured image (image data). When the optical sensor 5A is a laser sensor (LiDAR), the first sensor data is scanned data including the distance and direction from the optical sensor 5A to the sensed target (object).

When the optical sensor 5B is an imager, the second sensor data is a captured image (image data). When the optical sensor 5B is a laser sensor (LiDAR), the second sensor data is scanned data including the distance and direction from the optical sensor 5B to the sensed target (object).

As illustrated in FIG. 23, when work is done by the agricultural robot 1, the agricultural robot 1 is caused to travel through passage(s) 106 between cultivation areas 105 in the facility 100. For example, during the work, the agricultural robot 1 is caused to travel along the cultivation area(s) 105 (passage(s) 106) from the work start point P11 to the work end point P12.

When the agricultural robot 1 is caused to travel, the crop searcher 41G searches for a crop 2 based on the first sensor data (captured image and/or scanned data) H10 and the second sensor data (captured image and/or scanned data) K10.

The following description discusses the crop searcher 41G in detail.

As illustrated in FIG. 25, the crop searcher 41G includes a location estimator 81 and a location determiner 82. The location estimator 81 estimates, based on the first sensor data H11, a cultivation location Dn of a crop 2 in the facility 100 for cultivation of the crop 2. The location determiner 82 determines, based on the second sensor data H12 obtained when the agricultural robot 1 (traveling body 3) is in the vicinity of the cultivation location Dn estimated by the location estimator 81, a crop location Zn which is the location of the crop.

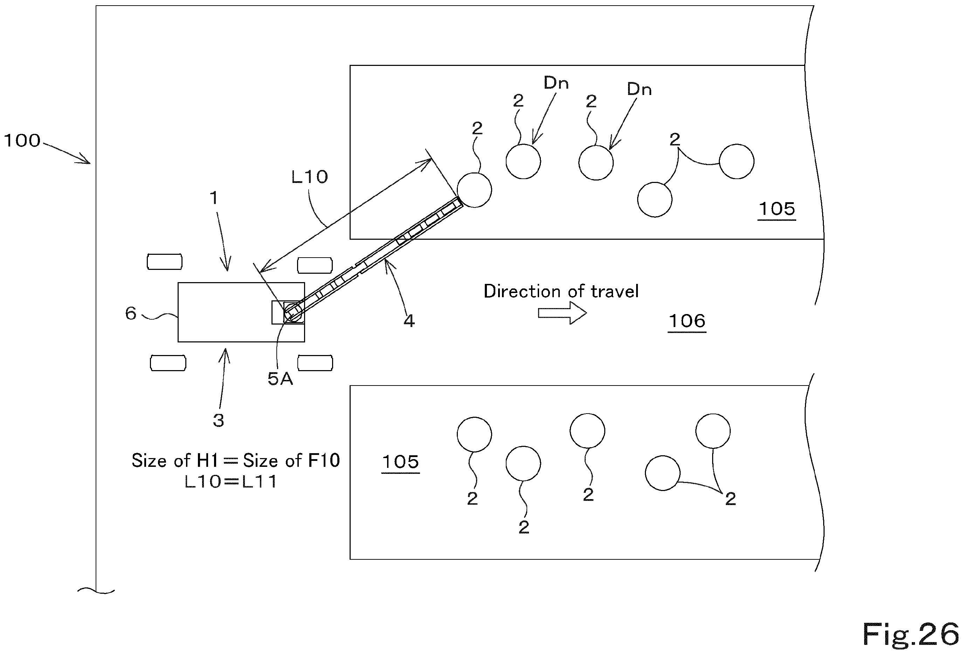

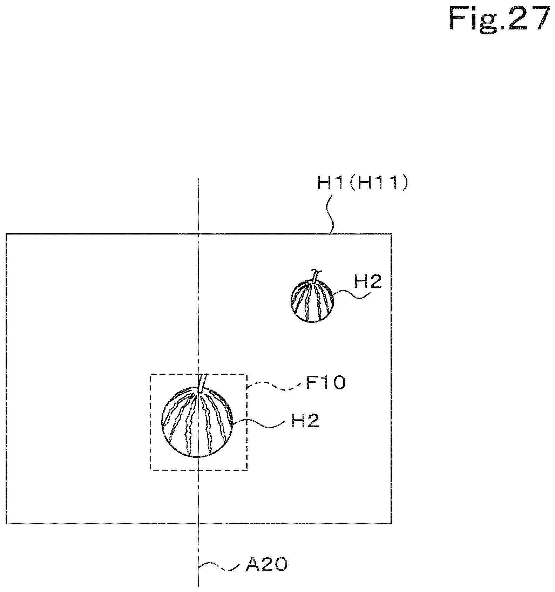

As illustrated in FIG. 26, when the agricultural robot 1 is caused to travel autonomously in the direction of travel in order to do work with respect to a crop 2 under cultivation in the cultivation area 105, the location estimator 81 refers to the first sensor data H11. As illustrated in FIG. 27, the location estimator 81 determines whether or not the referenced first sensor data H11 includes a profile of a crop 2. Specifically, in the case where the first sensor data H11 is a captured image, the location estimator 81 determines whether or not the captured image includes a crop 2 by subjecting the captured image to feature matching, pattern matching, and/or the like. For example, the location estimator 81 compares feature(s) obtained from the captured image with feature(s) of a prepared image of a crop. If the feature(s) obtained from the captured image and the feature(s) of the prepared image match each other, the captured image is determined as including a crop 2. If the feature(s) obtained from the captured image and the feature(s) of the prepared image do not match each other, the captured image is determined as not including a crop 2.

Alternatively, the location estimator 81 compares an image profile obtained from the captured image with a prepared reference profile indicative of the pattern on the surface of a crop 2, the outline of the crop 2, recesses/protrusions on the crop 2, and/or the like. If the reference profile and the image profile match each other, the captured image is determined as including a crop 2 and/or the like. If the reference profile and the image profile do not match each other, the captured image is determined as not including a crop 2.

Note that, when the first sensor data H11 is scanned data, the location estimator 81 determines whether or not an object imaged in the scanned data is a crop 2. In such a case, the location estimator 81 compares the profile of the object in the data with a reference profile. If the reference profile and the profile in the data match each other, the scanned data is determined as including a crop 2. If the reference profile and the profile in the data do not match each other, the scanned data is determined as not including a crop 2.

As illustrated in FIG. 26, if the location estimator 81 determines the first sensor data H11 as including a crop 2, the location estimator 81 calculates a relative distance L10 between the crop 2 and the agricultural robot 1 (traveling body 3). As illustrated in FIG. 27, for example, when the first sensor data H11 is a captured image H1, the location estimator 81 compares the size of an image H2 (the number of pixels in the vertical direction, the number of pixels in the horizontal direction) of a crop 2 which is a subject included in the captured image H1 and the size of a reference frame F10 (the number of pixels in the vertical direction, the number of pixels in the horizontal direction). If the image H2 of the crop 2 is smaller than that of the reference frame F10, the location estimator 81 determines the relative distance L10 as being longer than a predetermined reference distance L11 corresponding to the reference frame F10. That is, the location estimator 81 estimates the crop 2 as being located at a distance greater than the reference distance L11 from the agricultural robot 1 (traveling body 3). In contrast, if the size of the image H2 of the crop 2 is larger than that of the reference frame F10, the location estimator 81 determines the relative distance L10 as being shorter than the reference distance L11. That is, the location estimator 81 determines the crop 2 as being located at a distance less than the reference distance L11 from the agricultural robot 1 (traveling body 3).

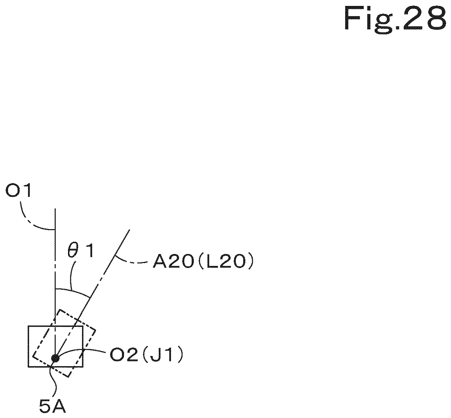

That is, the location estimator 81 compares the size of the image H2 of the crop 2 and the size of the reference frame F10 and, based on the ratio between the size of the image H2 of the crop 2 and the size of the reference frame F10 and on the reference distance L11, determines the relative distance L10 between the current location of the agricultural robot 1 and the crop 2. As illustrated in FIG. 28, with regard to the location estimator 81, when the arm bracket 26 is rotated about the first arm pivot shaft 33A from a neutral position MP1, an optical axis A20 of the optical sensor 5A is also pivoted at a certain angle θ1 relative to the neutral position MP1. Assuming here that a line along the Y axis corresponding to the optical axis A20 in the captured image H1 is referred to as a line L20, the location estimator 81 calculates the angle θ1 of the optical sensor 5A to the neutral position MP1 when the center of the image H2 of the crop 2 coincides with the line L20, and estimates, as the cultivation location Dn, a location on the line L20 at the calculated angle θ1 and at the relative distance L10 from a center O2 (rotation axis J1) of the optical sensor 5A.

If the travel controller 41A determines that the relative distance L10 (cultivation location Dn) estimated by the location estimator 81 is a long distance from the current location of the agricultural robot 1 (traveling body 3) and that the crop 2 is out of reach of the distal portion (robot hand 18) of the manipulator (working unit) 4, the travel controller 41A controls the agricultural robot 1 (traveling body 3) to move toward the cultivation location Dn so that the agricultural robot 1 (traveling body 3) is closer to the cultivation location Dn. When the agricultural robot 1 (traveling body 3) reaches a position at which the crop 2 is within the reach of the distal portion (robot hand 18) of the manipulator (working unit) 4, i.e., when the agricultural robot 1 (traveling body 3) reaches the vicinity of the cultivation location Dn, the travel controller 41A stops the agricultural robot 1 (traveling body 3).

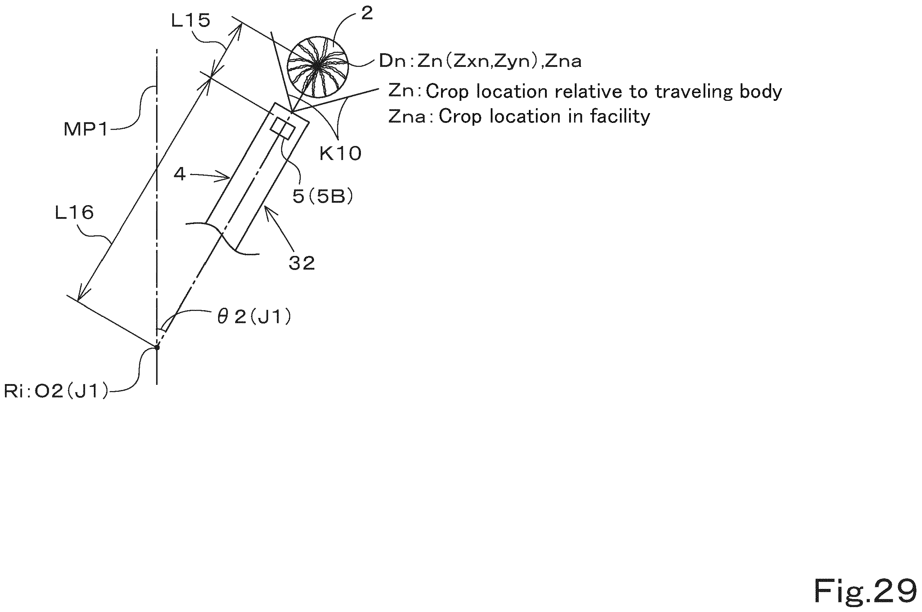

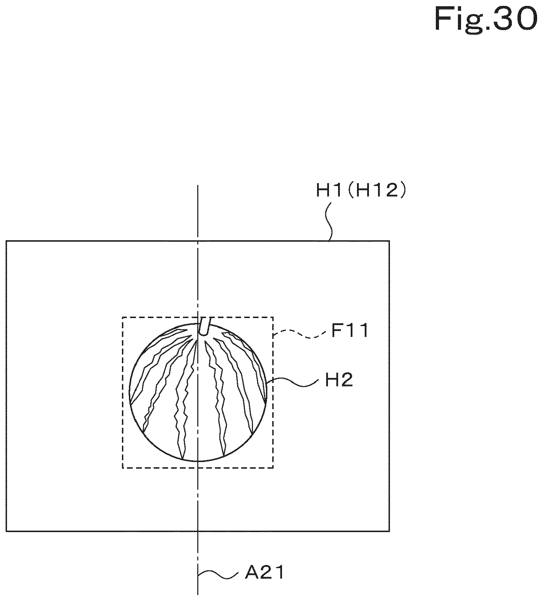

When the agricultural robot 1 (traveling body 3) is stopped after travel to the vicinity of the cultivation location Dn, as illustrated in FIGS. 29 and 30, the location determiner 82 refers to the second sensor data H12 and determines a location Zn of the crop 2 (crop location) from the referenced second sensor data H12. The location determiner 82 calculates a first distance (relative distance L15) between the second optical sensor 5B and the crop 2 based on the second sensor data H12, and determines the crop location Zn based on the calculated first distance (relative distance L15).

As illustrated in FIG. 30, for example, when the second sensor data H12 is a captured image H1, the location determiner 82 adjusts an angle θ2 of the arm assembly (the first arm assembly 31 and the second arm assembly 32) to the traveling body 3 such that the center (the center in the X axis direction) of the image H2 of the crop 2 included in the captured image H1 coincides with the center of the captured image H1, i.e., a line L21 along the Y axis corresponding to the optical axis of the second optical sensor 5B coincides with the center (the center in the X axis direction) of the image H2 of the crop 2.

The location determiner 82 compares the size of the image H2 of the crop 2 with the size of a reference frame F11 with the center (the center in the X axis direction) of the image H2 of the crop 2 coinciding with the center of the captured image H1. If the image H2 of the crop 2 is smaller than the reference frame F11, the location determiner 82 determines the relative distance L15 as being longer than the predetermined reference distance L11 corresponding to the reference frame F11. That is, the location determiner 82 estimates the crop 2 as being located at a distance greater than the reference distance L11 from the agricultural robot 1 (traveling body 3). In contrast, if the size of the image H2 of the crop 2 is larger than the reference frame F11, the location determiner 82 determines the relative distance L15 as being shorter than the reference distance L11. That is, the location determiner 82 estimates the crop 2 as being located at a distance less than the reference distance L11 from the agricultural robot 1 (traveling body 3).

The location determiner 82 compares the size of the image H2 of the crop 2 with the size of the reference frame F11, and determines the relative distance L15 between the second optical sensor 5B and the crop 2 based on the ratio between the size of the image H2 of the crop 2 and the size of the reference frame F11 and on the reference distance L 11.

The location determiner 82 calculates the sum of a movable distance L16 (distance from the rotation axis J1 to the second optical sensor 5B) and the relative distance L15 to calculate a relative distance L10 from the agricultural robot 1 (traveling body 3) to the crop 2. The location determiner 82 also calculates a location Zn of the crop 2 (crop location) (X coordinate: Zxn, Yxn, where n = 1, 2, 3, ... and so on) relative to the rotation axis J1 as the origin, from the relative distance L10 (the sum of the relative distance L15 and the movable distance L16) and the angle θ2 of the arm assembly to the traveling body 3.

Note that the movable distance L16 can be calculated from an angle θ3 of the first arm assembly 31 relative to the rotating frame 21, an angle θ4 between the first arm assembly 31 and the second arm assembly 32, the length of the first arm assembly 31, and/or the length of the second arm assembly 32 (stroke of the second arm assembly 32). For example, the angle θ3 can be determined using a sensor to detect the rotation of the first arm pivot shaft 33A or a sensor to detect the stroke of the first arm cylinder C4. The angle θ4 can be determined using a sensor to detect the rotation of the second arm pivot shaft 33B or a sensor to detect the stroke of the second arm cylinder C5.

In the above-described embodiment, an example in which the first sensor data H11 and the second sensor data H12 are each a captured image H1 is discussed. Alternatively, the first sensor data H11 and the second sensor data H12 may each be scanned data. The location estimator 81 is capable of calculating the relative distance L10 based on scanned data. The location determiner 82 is also capable of calculating the relative distance L15 based on scanned data.

Note that the second optical sensor 5B may include, besides a laser sensor and/or an imager, a spectrometer to detect the composition and/or the like of a crop 2 via spectral analysis of light waves emitted to and reflected from the crop 2. The second optical sensor 5B may include at least two out of the following: a laser sensor, an imager, and a spectrometer.

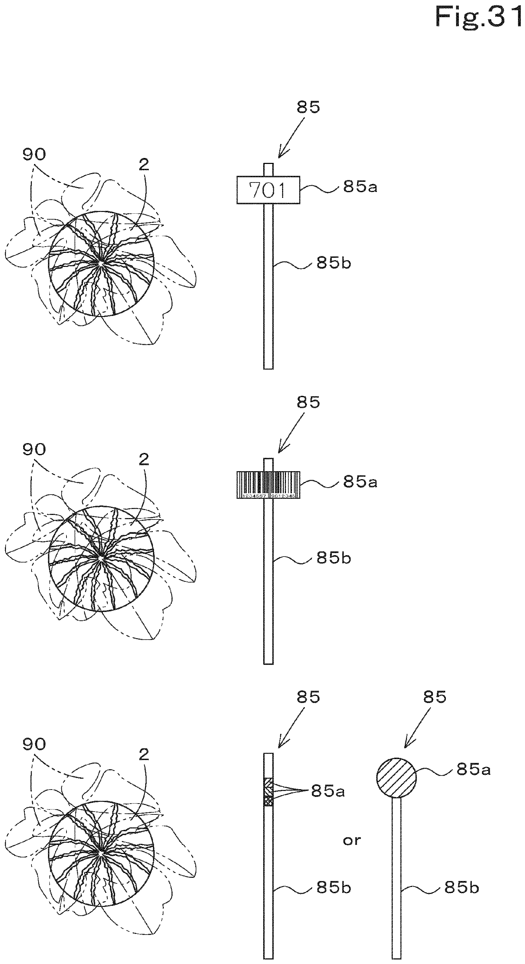

As illustrated in FIG. 31, there are cases in which an identifier member 85 for identification of a crop 2 is provided in the vicinity of the crop 2. The identifier member 85 includes a code portion 85a with identification information (identification data) of the crop 2 represented by a two-dimensional barcode, number(s), color(s), and/or the like and a supporting member 85b in the form of a column, a rod, or the like supporting the code portion 85a.

The crop searcher 41G may, when the first sensor data H11 or the second sensor data H12 includes the code portion 85a of the identifier member 85, estimate the cultivation location Dn or estimate the crop location Z*n* based on a second distance between the identifier member 85 and the traveling body 3. The identification information is associated with information about cultivation (cultivation information) such as the date on which a seedling of the crop 2 was planted and/or the expected harvest date of the crop 2. It is possible to know the date on which the crop 2 was planted, the expected harvest date of the crop 2, and/or the like corresponding to the identification information by detecting the identification information with the optical sensor(s) (the first optical sensor 5A and/or the second optical sensor 5B). Note that, for example, the cultivation information and the identification information are stored in an external device such as a server and/or a mobile terminal such that the cultivation information and the identification information are associated with each other. The agricultural robot 1 is capable of acquiring the cultivation information from the external device via, upon detection of the identification information by the optical sensor(s) (the first optical sensor 5A and/or the second optical sensor 5B), the communication device and/or the like of the agricultural robot 1 connecting to the external device. Although the cultivation information and the identification information associated with each other are stored in an external device in the above-described embodiment, the cultivation information and the identification information may be stored in the controller 41.

As illustrated in FIG. 31, if the crop 2 is covered with leaves and/or the like, it may be difficult to detect the shape (profile) of a crop 2 from the first sensor data H11 and the second sensor data H12. The crop searcher 41G refers to the first sensor data H11 or the second sensor data H12 and, if the referenced sensor data includes an identifier member 85, estimates the location of the identifier member 85, instead of the crop 2, as the cultivation location Dn or the crop location Zn.

Specifically, if the location estimator 81 determines the first sensor data H11 as including an identifier member 85, the location estimator 81 calculates the relative distance between the identifier member 85 and the agricultural robot 1 (traveling body 3). The location estimator 81 calculates the relative distance between the identifier member 85 and the agricultural robot 1 (traveling body 3) instead of the relative distance L10 between the crop 2 and the agricultural robot 1 (traveling body 3), and determines the cultivation location Dn based on the relative distance. A method of determining the cultivation location Dn is obtained merely by replacing the terms "crop 2" with "identifier member" and the terms "image of a/the crop 2" with "image of an/the identifier member 85" in the description of the location estimator 81, and thus is the same as in the case of the crop 2.

If the location determiner 82 determines the second sensor data H12 as including an identifier member 85, the location determiner 82 calculates the relative distance between the identifier member 85 and the second optical sensor 5B. The location determiner 82 calculates the relative distance between the identifier member 85 and the second optical sensor 5B instead of the relative distance L15 between the crop 2 and the second optical sensor 5B, and determines the crop location Zn based on the relative distance. A method of determining the crop location Zn is obtained merely by replacing the terms "crop 2" with "identifier member" and the terms "image of a/the crop 2" with "image of an/the identifier member 85" in the description of the location determiner 82, and thus is the same as in the case of the crop 2.

As illustrated in FIG. 25, the agricultural robot 1 may include a map creator 41H. The map creator 41H is electric/electronic circuit(s) provided in the controller 41, program(s) stored in the controller 41, and/or the like.

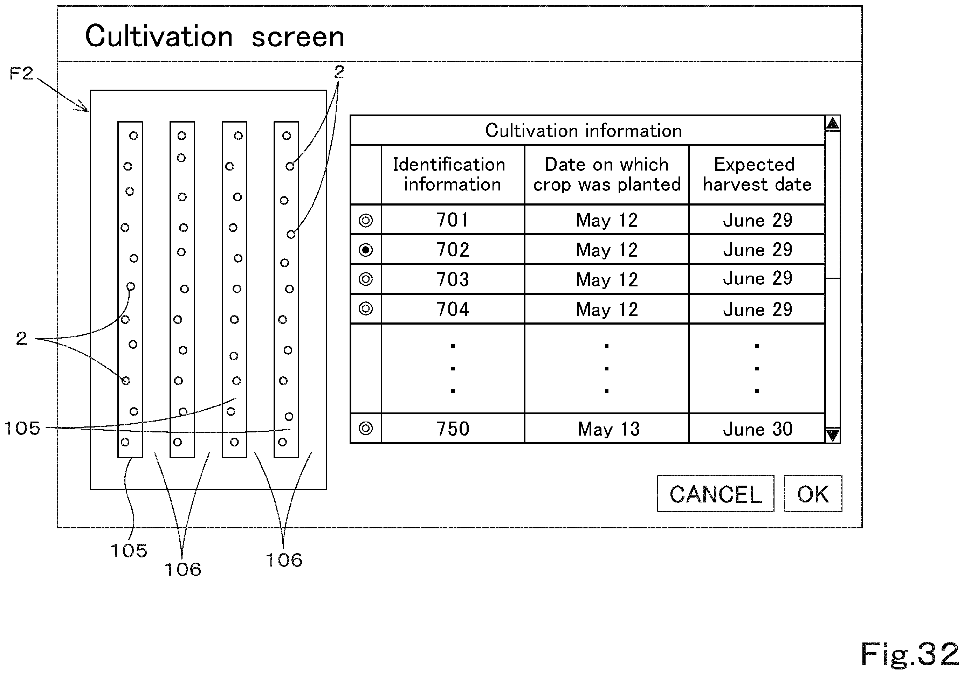

If the first sensor data H11 or the second sensor data H12 includes one or more pieces of identification information on one or more identifier members 85b, as illustrated in FIG. 32, the map creator 41H creates a cultivation map F2 including crop location(s) Zn and cultivation information based on the first sensor data H11, the second sensor data H12, and the code portion(s) 85a of the identifier member(s) 85 (identification information on the identifier member(s) 85b).

Specifically, the map creator 41H refers to a crop location Z*n* determined by the crop searcher 41G during travel of the agricultural robot 1 along the cultivation area(s) 105 from the work start point P11 to the work end point P12 as described earlier.

Next, the map creator 41H determines a crop location Z*na* in the facility 100 by using the location of the agricultural robot 1 (traveling body 3) (for example, the location of the rotation axis 11) as a vehicle body location R*i* (*i* = 1, 2, 3, ... and so on) and adding or subtracting the referenced crop location Z*n* (X coordinate: Z*xn*, Y*xn*, where *n* = 1, 2, 3 ... and so on) to or from the vehicle body location R*i* as illustrated in FIG. 29.

It is noted here that the vehicle body location R*i* can be determined from, for example, the distance from the entrance 130 to the current location of the agricultural robot 1 in the lengthwise direction Y1 or the distance from the entrance 130 to the current location of the agricultural robot 1 in the widthwise direction X1. Alternatively, the vehicle body location R*i* can be determined, assuming the work start point P11 as the origin in the facility 100, from the distance from the work start point P11 to the current location of the agricultural robot 1 in the lengthwise direction Y1 or the distance from the work start point P11 to the current location of the agricultural robot 1 in the widthwise direction X1.

Note that, also when the vehicle body location R*i* is determined with reference to the entrance 130 or the work start point P11, the current location of the agricultural robot 1 can be determined by, for example, providing the traveling body 3 with an odometer to measure the distance that the traveling body 3 has traveled.

As described earlier, the map creator 41H acquires, from an external device or the controller 41, identification information detected by the optical sensor(s) (the first optical sensor 5A and/or the second optical sensor 5B) during the travel of the agricultural robot 1 along the cultivation area(s) 105 from the work start point P11 to the work end point P12, determines the cultivation information from the acquired identification information, and creates a cultivation map F2 in which the determined cultivation information is associated with a corresponding crop location Z*na* as illustrated in FIG. 32. As illustrated in FIG. 32, the cultivation map F2 is displayed such that a shape representing a crop 2 is shown at each crop location Z*na.*

An agricultural robot 1 includes a traveling body 3 including a machine body 6 and a traveling device 7 supporting the machine body 6 such that the machine body 6 is allowed to travel, a manipulator 4 including a mount 16 detachably attached to the machine body 6, an arm 17 attached to the mount 16, and a robot hand 18 provided on a distal portion of the arm 17, a first optical sensor 5A provided on the machine body 6, a second optical sensor 5B provided on the arm 17 or the robot hand 18, and a crop searcher 41G to search for a crop 2 based on first sensor data H11 obtained by the first optical sensor 5A and second sensor data H12 obtained by the second optical sensor 5B. This makes it possible to more efficiently search for crop(s) 2 using both the first sensor data H11 obtained via sensing by the first optical sensor 5A at the machine body 6 and the second sensor data H12 obtained via sensing from the arm 17 or the robot hand 18. For example, it is possible to roughly know the location of a crop 2 using the first sensor data H11, and know the accurate location of the crop 2 using the second sensor data H12. Such a division into steps makes it possible to quickly move the traveling body 3 and the manipulator 4 to the location of the crop 2.

The crop searcher 41G includes a location estimator 81 to, based on the first sensor data H11, estimate a cultivation location D*n* in a facility 100 for cultivation of the crop 2, the cultivation location D*n* being a location where the crop 2 is cultivated, and a location determiner 82 to, based on the second sensor data H12 obtained when the traveling body 3 is in the vicinity of the cultivation location D*n* estimated by the location estimator 81, determine a crop location Z*n* which is a location of the crop 2. This makes it possible, in the facility 100, to know the cultivation location D*n* which is an approximate location of the crop and to know the crop location Z*n* which is the accurate location of the crop 2.

The agricultural robot 1 further includes a controller 41 to control the traveling body 3 to travel to the vicinity of the cultivation location D*n* estimated by the location estimator 81. This makes it possible to, in the facility 100, efficiently move the agricultural robot 1 to the cultivation location D*n* which is an approximate location of the crop.

The location determiner 82 determines the crop location Z*n* from the second sensor data H12 acquired from the second optical sensor 5B, the second sensor data H12 being obtained when the traveling body 3 is stopped in the vicinity of the cultivation location D*n* after travel to the vicinity of the cultivation location D*n*. This makes it possible, when the traveling body 3 has been moved and then stopped during work or the like, to easily determine the crop location Z*n* which is the accurate location of the crop 2, and, while the traveling body 3 is in the stopped state, to move the distal portion of the manipulator 4 to the determined crop location Z*n*. It is thus possible to efficiently do the work relating to the crop 2 at the crop location Z*n*.

The location determiner 82 calculates, based on the second sensor data H12, a first distance (relative distance) L15 between the crop 2 and the second optical sensor 5B or between the crop 2 and the traveling body 3, and determines the crop location Z*n* based on the calculated first distance (relative distance ) L15. This makes it possible to determine the crop location Z*n* which does not deviate much from the actual location of the crop 2.

The second optical sensor 5B includes at least two out of the following: a laser sensor; an imager; and a spectrometer. This makes it possible not only to accurately determine the crop location Z*n* of the crop 2 but also to know the condition of the crop 2 such as quality.

The crop searcher 41G is to, when the first sensor data H11 or the second sensor data H12 includes identification information on an identifier member 85b for identification of the crop, estimate the cultivation location D*n* and estimate the crop location Z*n* based on a second distance between the identifier member 85 and the traveling body 3. This makes it possible to easily determine the location of the crop 2 (the cultivation location D*n* and/or the crop location Z*n*) merely by sensing the presence or absence of the identifier member 85 without having to directly sense the crop 2.

The agricultural robot 1 further includes a map creator 41H to, when the first sensor data H11 or the second sensor data H12 includes one or more pieces of identification information on one or more identifier members 85b for identification of corresponding one or more of the crops, create a cultivation map F2 including one or more locations Z*n* of the one or more crops and cultivation information based on the first sensor data H11, the second sensor data H12, and the one or more pieces of identification information. This makes it possible to easily check the crop location(s) Z*n* and the cultivation information using the cultivation map F2. For example, when doing work with the agricultural robot 1, it is possible to do the work according to the cultivation information at each crop location Z*n*.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### [REFERENCE SIGNS LIST]

1 Agricultural robot
2 Crop
2a Crop
2b Crop
2c Crop
3 Traveling body
4 Working unit (manipulator)
5A Optical sensor
5B Optical sensor
6 Machine body
7 Traveling device
16 Mount
17 Arm
18 Robot hand
23 Collector
41 Controller
41A Travel controller
41B Work controller
41C Location manager
41D Map generator
41E Model generator
41F Stage determiner
41G Crop searcher
41H Map creator
43 Collector
50C Tap sound sensor
51 Tapping mechanism
63 Collector
81 Location estimator
82 Location determiner
85 Identifier member
85b Identifier member
100 Facility
105 Cultivation area
F1 Map
R1 First profile
R2 Second profile
D*n* Cultivation location
L11 Reference distance
F2 Cultivation map
H11 First sensor data
H12 Second sensor data
Z*n* Crop location

## Claims

1. An agricultural robot comprising:
a traveling body;
a working unit to do work relating to a crop, the working unit being provided on the traveling body;
an optical sensor provided on the traveling body; and
a location manager to determine, based on sensor data obtained by the optical sensor, whether or not the traveling body is located in a facility for cultivation of the crop, wherein
the working unit does the work relating to the crop based on the working unit if the location manager determines the traveling body as being located in the facility.

2. The agricultural robot according to claim 1, wherein the location manager determines the traveling body as being located in the facility if the sensor data includes a structure of the facility and the structure matches a first profile as seen from an interior of the facility.

3. The agricultural robot according to claim 2, wherein the location manager determines the traveling body as being located in the facility if the sensor data includes a second profile of a cultivation area of the crop in addition to the first profile.

4. The agricultural robot according to claim 3, further comprising a travel controller to control travel of the traveling body based on the first profile and the second profile.

5. The agricultural robot according to claim 3 or 4, further comprising a map generator to generate a map of the interior of the facility based on the first profile and on the crop included in the second profile.

6. The agricultural robot according to any one of claims 2 to 5, wherein the location manager determines whether the structure matches the first profile based on a trained model and the sensor data.

7. The agricultural robot according to claim 6, wherein the location manager performs reinforcement learning by acquiring the sensor data obtained during travel of the traveling body in the facility.

8. The agricultural robot according to any one of claims 1 to 7, wherein the location manager determines whether or not the traveling body is located in the facility based on sensor data including, as the structure, a frame of the facility.

9. An assistance system for an agricultural robot,
the agricultural robot comprising:
a traveling body;
a working unit to do work relating to a crop, the working unit being provided on the traveling body; and
an optical sensor provided on the traveling body,
wherein the agricultural robot does the work relating to the crop based on the working unit if the traveling body is located in the facility for cultivation of the crop,
the assistance system comprising:
a location manager to determine, based on sensor data obtained by the optical sensor, whether or not the traveling body is located in the facility.

10. The assistance system according to claim 9, wherein the location manager determines the traveling body as being located in the facility if the sensor data includes a structure of the facility and the structure matches a first profile as seen from an interior of the facility.

11. The assistance system according to claim 10, wherein the location manager determines the traveling body as being located in the facility if the sensor data includes a second profile of a cultivation area of the crop in addition to the first profile.

12. The assistance system according to claim 11, further comprising a travel controller to control travel of the traveling body based on the first profile and the second profile.

13. The assistance system according to claim 11 or 12, further comprising a map generator to generate a map of the interior of the facility based on the first profile and on the crop included in the second profile.

14. The assistance system according to any one of claims 10 to 13, wherein the location manager determines whether the structure matches the first profile based on a trained model and the sensor data.

15. The assistance system according to claim 14, wherein the location manager performs reinforcement learning by acquiring the sensor data obtained during travel of the traveling body in the facility.

16. The assistance system according to any one of claims 9 to 15, wherein the location manager determines whether or not the traveling body is located in the facility based on sensor data including, as the structure, a frame of the facility.

17. An agricultural robot comprising:
a traveling body configured to move toward a cultivation location which is a location where a crop is cultivated;
a manipulator configured to bring a distal portion thereof closer to the crop when the traveling body reaches a vicinity of the cultivation location, the manipulator being provided on the traveling body;
a tap sound sensor including
a tapping mechanism to tap the crop, the tapping mechanism being provided on the distal portion of the manipulator, and
a sound recording mechanism to acquire a sound that the crop produces when tapped with the tapping mechanism; and
a collector to acquire data of the sound acquired by the sound recording mechanism.

18. The agricultural robot according to claim 17, further comprising:
a controller to, at least after acquisition of the data by the collector, control the traveling body to move toward a cultivation location of another crop from which data of a sound produced thereby has not been acquired.

19. The agricultural robot according to claim 18, further comprising an optical sensor provided on the traveling body, wherein
the controller controls, based on sensor data obtained by the optical sensor, the traveling body to move toward the cultivation location of the other crop such that a distance between the other crop and the traveling body is a predetermined reference distance.

20. The agricultural robot according to any one of claims 17 to 19, further comprising a model generator to, based on a plurality of pieces of the data acquired by the collector, generate a model to estimate a crop growth state.

21. The agricultural robot according to claim 20, wherein the model generator performs reinforcement learning upon each data acquisition by the collector.

22. The agricultural robot according to claim 20 or 21, further comprising:
a robot hand to harvest the crop by holding the crop; and
a stage determiner to determine, based on the model and the data, whether or not the tapped crop is in a harvesting stage, wherein
the robot hand harvests the tapped crop if the stage determiner determines the tapped crop as being in the harvesting stage, and does not harvest the tapped crop if the stage determiner determines the tapped crop as not being in the harvesting stage.

23. The agricultural robot according to any one of claims 17 to 22, wherein the collector is a memory to store the data or a communication device to transmit the data to an external terminal.

24. An assistance system for an agricultural robot,
the agricultural robot comprising:
a traveling body configured to move toward a cultivation location which is a location where a crop is cultivated;
a manipulator configured to bring a distal portion thereof closer to the crop when the traveling body reaches a vicinity of the cultivation location, the manipulator being provided on the traveling body; and
a tap sound sensor including
a tapping mechanism to tap the crop, the tapping mechanism being provided on the distal portion of the manipulator, and
a sound recording mechanism to acquire a sound that the crop produces when tapped with the tapping mechanism,
the assistance system comprising:
a collector to acquire data of the sound acquired by the sound recording mechanism.

25. The assistance system according to claim 24, further comprising:
a controller to, at least after acquisition of the data by the collector, control the traveling body to move toward a cultivation location of another crop from which data of a sound produced thereby has not been acquired.

26. The assistance system according to claim 25, further comprising an optical sensor provided on the traveling body, wherein
the controller controls, based on sensor data obtained by the optical sensor, the traveling body to move toward the cultivation location of the other crop such that a distance between the other crop and the traveling body is a predetermined reference distance.

27. The assistance system according to any one of claims 24 to 26, further comprising a model generator to, based on a plurality of pieces of the data acquired by the collector, generate a model to estimate a crop growth state.

28. The assistance system according to claim 27, wherein the model generator performs reinforcement learning upon each data acquisition by the collector.

29. The assistance system according to claim 27 or 28, further comprising:
a work controller to control a robot hand configured to harvest the crop by holding the crop; and
a stage determiner to determine, based on the model and the data, whether or not the tapped crop is in a harvesting stage, wherein
the work controller controls the robot hand to harvest the tapped crop if the stage determiner determines the tapped crop as being in the harvesting stage, and controls the robot hand not to harvest the tapped crop if the stage determiner determines the tapped crop as not being in the harvesting stage.

30. The assistance system according to any one of claims 24 to 29, wherein the collector is a memory to store the data or a communication device to transmit the data to an external terminal.

31. An agricultural robot comprising:
a traveling body including a machine body and a traveling device supporting the machine body such that the machine body is allowed to travel;
a manipulator including a mount detachably attached to the machine body, an arm attached to the mount, and a robot hand provided on a distal portion of the arm;
a first optical sensor provided on the machine body;
a second optical sensor provided on the arm or the robot hand; and
a crop searcher to search for a crop based on first sensor data obtained by the first optical sensor and second sensor data obtained by the second optical sensor.

32. The agricultural robot according to claim 31, wherein the crop searcher includes:
a location estimator to, based on the first sensor data, estimate a cultivation location in a facility for cultivation of the crop, the cultivation location being a location where the crop is cultivated; and
a location determiner to, based on the second sensor data obtained when the traveling body is in the vicinity of the cultivation location estimated by the location estimator, determine a crop location which is a location of the crop.

33. The agricultural robot according to claim 32, further comprising a controller to control the traveling body to travel to the vicinity of the cultivation location estimated by the location estimator.

34. The agricultural robot according to claim 33, wherein the location determiner determines the crop location from the second sensor data acquired from the second optical sensor, the second sensor data being obtained when the traveling body is stopped in the vicinity of the cultivation location after travel to the vicinity of the cultivation location.

35. The agricultural robot according to claim 34, wherein:
the location determiner
calculates, based on the second sensor data, a first distance between the crop and the second optical sensor or between the crop and the traveling body, and
determines the crop location based on the calculated first distance.

36. The agricultural robot according to any one of claims 31 to 35, wherein the second optical sensor includes at least two out of the following: a laser sensor; an imager; and a spectrometer.

37. The agricultural robot according to any one of claims 31 to 36, wherein when the first sensor data or the second sensor data includes identification information on an identifier member for identification of the crop, the crop searcher estimates the cultivation location and estimates the crop location based on a second distance between the identifier member and the traveling body.

38. The agricultural robot according to any one of claims 31 to 36, further comprising a map creator to, when the first sensor data or the second sensor data includes one or more pieces of identification information on one or more identifier members for identification of corresponding one or more of the crops, create a cultivation map including one or more locations of the one or more crops and cultivation information based on the first sensor data, the second sensor data, and the one or more pieces of identification information.
